(19) Europäisches Patentamt
European Patent Office
Office européen des brevets

(11) **EP 4 668 949 A1**

(12) **EUROPEAN PATENT APPLICATION**
published in accordance with Art. 153(4) EPC

(43) Date of publication:
**24.12.2025 Bulletin 2025/52**

(21) Application number: **24756529.4**

(22) Date of filing: **12.01.2024**

(51) International Patent Classification (IPC):
**H04W 72/0446** *(2023.01)*    **H04W 4/46** *(2018.01)*
**H04W 16/14** *(2009.01)*    **H04W 56/00** *(2009.01)*
**H04W 72/0453** *(2023.01)*    **H04W 72/54** *(2023.01)*
**H04W 92/18** *(2009.01)*

(52) Cooperative Patent Classification (CPC):
**H04W 4/46; H04W 16/14; H04W 56/00;**
**H04W 72/0446; H04W 72/0453; H04W 72/54;**
**H04W 92/18**

(86) International application number:
**PCT/JP2024/000703**

(87) International publication number:
**WO 2024/171677 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.02.2023 JP 2023022523**

(71) Applicant: **Panasonic Intellectual Property**
**Corporation**
**of America**
**Torrance, CA 90504 (US)**

(72) Inventors:
• **HORIUCHI, Ayako**
**Kadoma-shi, Osaka 571-0057 (JP)**
• **NUNOME, Tomoya**
**Kadoma-shi, Osaka 571-0057 (JP)**
• **SUZUKI, Hidetoshi**
**Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **COMMUNICATION DEVICE, COMMUNICATION METHOD, AND INTEGRATED CIRCUIT**

(57)    The present invention improves the utilization efficiency of a communication resource in an unlicensed band. This communication device is provided with: a control circuit for determining a resource allocation that does not conflict with a synchronization signal block, for a signal different from the synchronization signal block, in a time resource in which the synchronization signal block can be transmitted, the synchronization signal block being placed in a resource pool used for terminal-to-terminal communication on an unlicensed band; and a communication circuit for transmitting or receiving the signal.

FIG. 6

## Description

Technical Field

The present disclosure relates to a communication apparatus, a communication method, and an integrated circuit.

Background Art

Enhancement of a communication system called the 5th Generation mobile communication system (5G) has been studied. In 5G, it has been discussed to flexibly provide functions for each of use cases that require an increase in communication traffic, an increase in the number of terminals to be connected, high reliability, and low latency.

Citation List

Non-Patent Literature

NPL 1
3GPP, TR 38.885 V16.0.0, "Study on NR Vehicle-to-Everything (V2X)"
NPL 2
RP-201385, "WID revision: NR Sidelink enhancement," LG Electronics, June 29 - July 3, 2020
NPL 3
RP-213678, "New WID on NR Sidelink evolution," OPPO, LG Electronics, Dec. 6 - 17, 2021
NPL 4
3GPP, TS 38.331 V17.3.0, "NR; Radio Resource Control (RRC); Protocol specification"

Summary of Invention

There is room for consideration, however, with respect to the effective utilization of communication resources in an unlicensed band.

One non-limiting and exemplary embodiment of the present disclosure facilitates providing a communication apparatus, a communication method, and an integrated circuit each capable of improving the resource utilization efficiency of communication in an unlicensed band.

A communication apparatus according to an exemplary embodiment of the present disclosure includes: control circuitry, which, in operation, determines allocation of a resource that does not collide with a synchronization signal block to a signal different from the synchronization signal block in a time resource in which the synchronization signal block is transmittable, the synchronization signal block being mapped in a resource pool used for terminal-to-terminal communication in an unlicensed band; and communication circuitry, which, in operation, performs transmission or reception of the signal.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve the resource utilization efficiency of communication in an unlicensed band.

Additional benefits and advantages of the disclosed aspects will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram illustrating exemplary channel mapping in a slot;
FIG. 2 is a diagram illustrating exemplary mapping of a sidelink synchronization signal block (S-SSB);
FIG. 3 is a diagram illustrating an exemplary regulation regarding a frequency of a signal in an unlicensed band;
FIG. 4 is a diagram illustrating exemplary interlace allocation;

FIG. 5 is a block diagram illustrating an exemplary configuration of a part of a base station;

FIG. 6 is a block diagram illustrating an exemplary configuration of a part of a terminal;

FIG. 7 is a diagram illustrating an exemplary configuration of additional S-SSBs;

FIG. 8 is a diagram illustrating exemplary channel mapping in a slot;

FIG. 9 is a diagram illustrating another exemplary channel mapping in a slot;

FIG. 10 is a diagram illustrating still another exemplary channel mapping in a slot;

FIG. 11 is a diagram illustrating still another exemplary channel mapping in a slot;

FIG. 12 is a diagram illustrating still another exemplary channel mapping in a slot;

FIG. 13 is a block diagram illustrating an exemplary configuration of the terminal;

FIG. 14 is a diagram illustrating exemplary channel mapping in a slot;

FIG. 15 is a diagram illustrating exemplary channel mapping in a slot;

FIG. 16 is a diagram illustrating exemplary channel mapping in a slot;

FIG. 17 is a diagram illustrating exemplary channel mapping in a slot;

FIG. 18 is a diagram illustrating exemplary channel mapping in a slot;

FIG. 19 is a diagram illustrating an exemplary transmission timing of an additional physical sidelink feedback channel (PSFCH);

FIG. 20 is a diagram illustrating exemplary assignment of PSFCH and additional PSFCH;

FIG. 21 is a diagram illustrating another exemplary assignment of PSFCH and additional PSFCH;

FIG. 22 is a block diagram illustrating another exemplary configuration of the terminal;

FIG. 23 is a diagram of an exemplary architecture of a 3GPP NR system;

FIG. 24 is a schematic diagram illustrating functional split between NG-RAN and 5GC;

FIG. 25 is a sequence diagram of a Radio Resource Control (RRC) connection setup/reconfiguration procedure;

FIG. 26 is a schematic diagram illustrating usage scenarios of enhanced Mobile BroadBand (eMBB), massive Machine Type Communications (mMTC), and Ultra Reliable and Low Latency Communications (URLLC); and

FIG. 27 is a block diagram illustrating an exemplary 5G system architecture for a non-roaming scenario.

Description of Embodiments

Hereinafter, embodiments of the present disclosure will be described in detail with reference to the drawings.

In the 3rd Generation Partnership Project (3GPP), which is an international standards-developing organization, has been studying development of a communication systems in terms of both the development of the Long Term Evolution (LTE) system and New Radio (NR). In 3GPP, it has been first considered to support vehicle to X (V2X) in the LTE system. It is also considered to support V2X in NR in which a band broader than in LTE is available (see, for example, NPL 1).

In addition to V2X, further enhancement of communication using sidelink (SL) have been studied (see, for example, NPL 2). V2X assumes Vehicle to Vehicle (V2V), Vehicle to Infrastructure (V2I), Vehicle to Pedestrian (V2P), and Vehicle to Network (V2N) communication.

In the V2V, V2I, and V2P, terminals can directly transmit and receive signals to and from each other using a link called sidelink or PC5 without through a network with a base station (for example, network through base station). V2N assumes communication through a link called Uu between a base station and a terminal. Note that the base station may be referred to as gNB in NR or as eNB in LTE. Meanwhile, the terminal may be referred to as User Equipment (UE).

Further, utilization of sidelink communication in an unlicensed band (license-exempt band) has also been studied (see, for example, NPL 3).

[NR Sidelink]

In NR sidelink, unicast, groupcast, and broadcast are supported in transmission and reception. In unicast, one-to-one transmission from a transmission terminal (also referred to as Tx UE, source UE, or a transmission source terminal) to a reception terminal (also referred to as Rx UE, destination UE, or a destination terminal) is assumed. In groupcast, transmission from a transmission terminal to one or more reception terminals included in a certain group is assumed. In broadcast, transmission from a transmission terminal without specifying a reception terminal is assumed.

In NR sidelink, a control signal called sidelink control information (SCI) is transmitted and received. In sidelink, there is a function in which a particular terminal (for example, terminal A) receives SCI transmitted from a terminal different from terminal A, and after grasping the usage situation of the resource of the terminal, determines a resource to be used for transmission by terminal A. This function is also called "sensing."

Note that, in sidelink, signals are transmitted and received through the following channels.

- Physical SL control channel (PSCCH): 1st-stage SCI (sidelink control information) is mapped to PSCCH.
- Physical SL shared channel (PSSCH): a data signal and 2nd-stage SCI are mapped to PSSCH.

- Physical SL feedback channel (PSFCH): a feedback signal for PSSCH is mapped to PSFCH. The feedback signal indicates, for example, a response signal (for example, also referred to as hybrid automatic repeat request-acknowledgement (HARQ-ACK)) including an acknowledgement (ACK) indicating that reception of PSSCH has succeeded or a negative acknowledgement (NACK) indicating that reception of PSSCH has failed. The feedback signal is applicable in a case where PSSCH is transmitted by unicast or groupcast. In addition, in Release 17 (Rel. 17) and later, as inter-UE coordination, PSFCH may be transmitted in a case where a collision is detected.
- Physical SL broadcast channel (PSBCH): a broadcast signal is mapped to PSBCH. PSBCH is transmitted together with a signal for synchronization. The signal for synchronization is, for example, a Sidelink Primary synchronization signal (S-PSS) and/or a Sidelink secondary synchronization signal (S-SSS). PSBCH to be transmitted together with a signal for synchronization is also collectively referred to as a sidelink synchronization signal block (S-SSB).

Note that, the signal to be transmitted or received in sidelink may be referred to as a "sidelink signal." Further, for example, "transmission of information (or a signal) mapped to PSCCH" may be abbreviated to "PSCCH transmission." Further, in the following description, PSCCH may refer to a resource defined as PSCCH or information (or a signal) mapped to a resource defined as PSCCH. Even for channels other than PSCCH, abbreviations may be used as is the case with PSCCH.

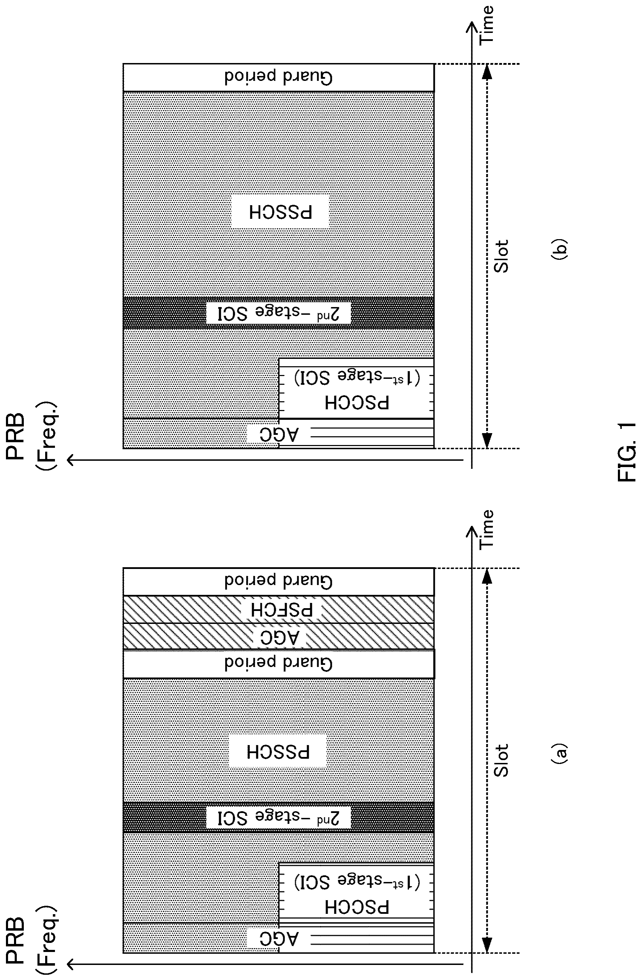

FIG. 1 illustrates exemplary mapping of PSCCH, PSSCH, and PSFCH in a slot. The horizontal axis in FIG. 1 represents the time axis, and the vertical axis represents the frequency axis in physical resource block (PRB) units. FIG. 1 illustrates two examples of (a) and (b).

Note that, as illustrated in (a) of FIG. 1, PSFCH may be mapped. Alternatively, as illustrated in (b) of FIG. 1, PSFCH may not be mapped due to a configuration. In a case where PSFCH is not mapped, the area of PSSCH may be increased.

The number of symbols of a sidelink signal in a slot may be variable depending on a configuration. Further, the mapping of the 2nd-stage SCI may be changed due to mapping of a demodulation reference signal (DMRS) of PSSCH, which is not illustrated. The 1st-stage SCI is mapped from the lowest frequency resource among frequency resources to which PSSCH is assigned. Due to auto gain control (AGC), copies of the starting symbols of PSCCH and PSSCH are mapped to the symbols before the starting symbols of PSCCH and PSSCH. Further, as illustrated in (a) of FIG. 1, a copy of PSFCH is also mapped before the symbol of PSFCH due to AGC.

Further, in (a) of FIG. 1, a guard interval (may also be referred to as a guard period or a gap) for switching between transmission and reception is mapped in the interval between PSSCH and PSFCH and in the interval after the last symbol of PSFCH. In (b) of FIG. 1, a guard period for switching between transmission and reception is mapped in the interval after the last symbol of PSSCH. The guard period may correspond to a period in which no signal is transmitted or received.

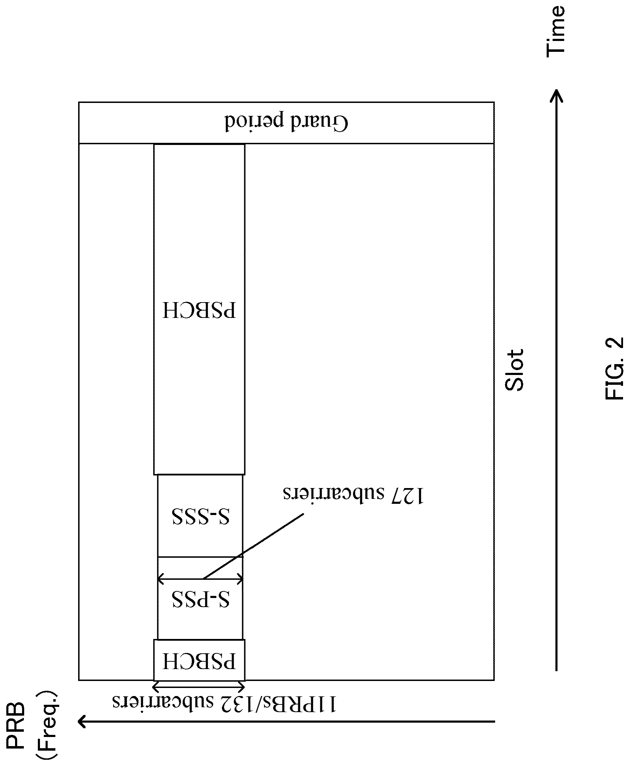

FIG. 2 illustrates exemplary mapping of S-SSB in a slot. A slot to which S-SSB is mapped is included in a Sidelink bandwidth part (SL-BWP) to be described later, but is not included in a resource pool. As illustrated in FIG. 2, S-SSB is composed of S-PSS, S-SSS, and PSBCH, and S-PSS, S-SSS, and PSBCH are transmitted in the same slot. In addition, frequency resource positions of S-SSS, S-PSS, and PSBCH are predetermined and they are mapped to consecutive 11 PRBs. For example, the 11 PRBs are composed of 132 subcarriers. In addition, as illustrated in FIG. 2, for example, S-SSS and S-PSS are mapped to the second to 128th subcarriers (127 subcarriers) among the 132 subcarriers, and PSBCH is mapped to the 0th to 131st subcarriers (132 subcarriers). In addition, in the slot, S-PSS is mapped to symbols #1 and #2, S-SSS is mapped to symbols #3 and #4, and PSBCH is mapped to symbols #0, #5, and #6 to one symbol before the last symbol of the sidelink slot. As illustrated in FIG. 2, the last symbol is used for a guard period for switching between transmission and reception.

In addition, in the sidelink communication, it is not assumed that a terminal performs transmission and reception at the same time, and the terminal operates by switching between transmission and reception. The fact that transmission and reception cannot be performed at the same time is also referred to as a "half duplex issue."

The sidelink communication in NR includes two modes that are referred to as Mode 1 and Mode 2. In Mode 1, a base station determines (schedules) a resource to be used by a terminal for sidelink and indicates a scheduling result to the terminal. In Mode 2, a terminal determines (or selects) a resource to be used for sidelink from resources in a resource pool configured in advance. A base station and a terminal are connected with each other in Mode 1, and Mode 1 is assumed to be used in an environment in which the terminal performing sidelink communication can receive an indication from the base station. In Mode 2, a terminal can perform transmission in sidelink without an indication from a base station, and thus, sidelink communication can be performed with a terminal under a different operator and/or a terminal present outside the coverage of the base station.

A resource used for sidelink is configured by, for example, a sidelink band width part (SL BWP) and a resource pool.

The SL BWP specifies a frequency band that can be used for sidelink and is configured separately from a downlink Band width part (DL BWP) and an uplink Band width part (UL BWP) configured between a base station and a terminal (Uu). For example, the frequency band of SL BWP may overlap with UL BWP.

The resource pool is resources within SL BWP, and resources in the frequency direction and time direction are specified by the resource pool. A terminal transmits and receives, for example, PSCCH, PSSCH, and PSFCH in the resource pool. For example, a plurality of resource pools may be configured for a single terminal. Frequency resources in a resource pool are divided into units called "subchannels," and resource allocation can be configured in units of subchannels. A subchannel includes a plurality of physical resource blocks (PRBs), and PSSCH can be assigned in units of subchannels, which are groups of a plurality of PRBs.

[Unlicensed Band]

With enhanced communication capacity, the utilization of an unlicensed band has been studied in the 3GPP in addition to a licensed band. In the unlicensed band, operations to ensure fairness in coexistence with other apparatuses of Wifi (registered trademark) and/or Licensed Assisted Access (LAA) based on LTE, for example, are added and enhanced.
In the unlicensed band, a communication apparatus (for example, a base station or a terminal) performs Listen Before Talk (LBT) in order to ensure fairness with other apparatuses, and starts transmission after confirming that no other apparatus is transmitting a signal nearby (for example, a channel state is idle). The term LBT may be replaced with other terms such as carrier sense or sensing. The communication apparatus performs the LBT and confirms that no other apparatus is transmitting a signal nearby, and then a channel occupancy time (COT), which is a time of channel occupancy, is configured for the communication apparatus. In the COT, the communication apparatus can transmit and receive signals in DL (downlink) resources and UL (uplink) resources.
There are two operation methods for the LBT. The first operation method is load based equipment (LBE). In the LBE, when a communication apparatus acquires the COT, the communication apparatus performs Type 1 channel access procedure (also referred to as category 4 LBT or Type 1 LBT). Further, in a portion other than the beginning of the COT, the communication apparatus can perform Type 2 channel access procedure (also referred to as Type 2 LBT) and can start transmission after that.
Note that, in the following description, a communication apparatus (for example, a base station or a terminal) "starting transmission after performing LBT" corresponds to the communication apparatus starting transmission after performing LBT and confirming that no other apparatus is transmitting a signal nearby.
Type 2 channel access procedure is further classified into Type 2A, Type 2B, and Type 2C. For example, even in a case where sidelink communication is performed in an unlicensed band, Type 1 channel access procedure and Type 2 channel access procedure are applied.
In Type 2A, in a case where an interval between two resources that are consecutive in time is 25 $\mu$s or more, a terminal performs LBT within 25 $\mu$s. The terminal can start transmission when not confirming (or specifying) transmission of another apparatus in LBT.
In Type 2B, in a case where an interval between two resources that are consecutive in time is 16 $\mu$s, a terminal performs LBT within 16 $\mu$s. The terminal can start transmission when not confirming (or specifying) transmission of another apparatus in LBT.
In Type 2C, in a case where an interval between two resources that are consecutive in time is less than 16 $\mu$s, a terminal can start transmission without LBT. Note that, exceptionally, in a case of transmission of a discovery reference signal (DRS) for transmitting SSB and S-SSB transmitted in an unlicensed band for sidelink, the transmission time is short and the transmission cycle is long, and thus, a terminal can perform Type 2 channel access procedure instead of Type 1 channel access procedure and start transmission.
The second operation method is frame based equipment (FBE). The FBE is an operation in which no other equipment of Wifi and the like is assumed to be installed in the same space, the frame period is fixed, and LBT is performed at the beginning of the frame to acquire COT. In the FBE, COT can be acquired only from the beginning of the fixed frame period. Further, the FBE is defined to include an idle period of 5% or more for each fixed frame period.
The unlicensed band has been described, thus far.
In each of the following embodiments, examples of performing sidelink communication in an unlicensed band will be described. Sidelink communication utilizing an unlicensed band is also referred to as Sidelink unlicensed (SL-U).
In an unlicensed band, a terminal starts transmission when confirming no transmission from another apparatus after performing LBT. On the other hand, in an unlicensed band, a terminal does not start transmission when detecting a signal of another apparatus and confirming transmission from another apparatus after performing LBT. The case where a signal of another apparatus is detected is also referred to as "busy (or channel busy)," "unavailable," or "LBT failure."
In a case of the LBT failure, a terminal cannot acquire a transmission right in an allocated resource or a selected resource and thus cannot start transmission, even in sidelink. For example, in a case where another apparatus starts transmission in a slot before the slot in which the terminal is scheduled to perform transmission (a slot in which a resource is reserved), or in a case where another apparatus starts transmission in a symbol immediately before the slot in which the terminal is scheduled to perform transmission, the terminal performs LBT before the slot in which the terminal is scheduled to perform transmission, and it results in LBT failure, so that the terminal cannot start transmission of a sidelink signal.

As a method of retransmitting a signal of a channel in which transmission cannot be started due to LBT failure, for example, in an unlicensed band for sidelink, an "additional S-SSB" and an "additional PSFCH" for adding resources of S-SSB and PSFCH are studied. Here, it is expected that the additional S-SSB and the additional PSFCH avoid collision with PSSCH and existing PSFCH.

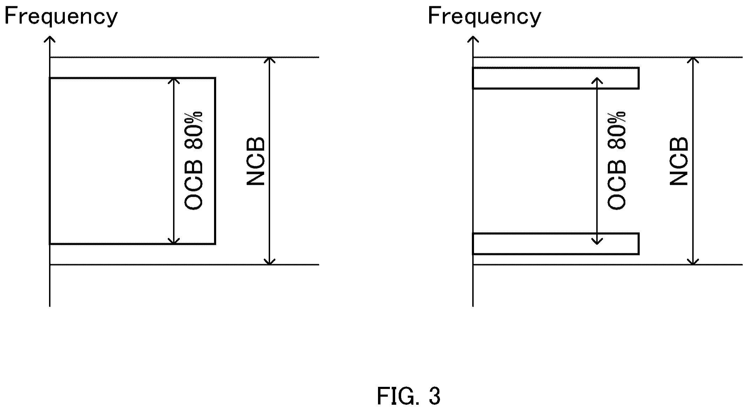

In addition, in an unlicensed band, there is a regulation of ETSI (ETSI EN 301 893 V2.1.1 (2017-05)) in which an occupied channel bandwidth (OCB) satisfies 80% to 100% of a nominal channel bandwidth (NCB). In a case where the regulation of ETSI is satisfied, it is necessary to perform transmission using frequencies of 80% or more of the frequency band of the NCB. For example, as illustrated in FIG. 3, frequencies of 80% or more of the frequency band (NCB) may be consecutively used (transmitted), or a plurality of divided resources may be arranged so that both ends exceed 80% of the band.

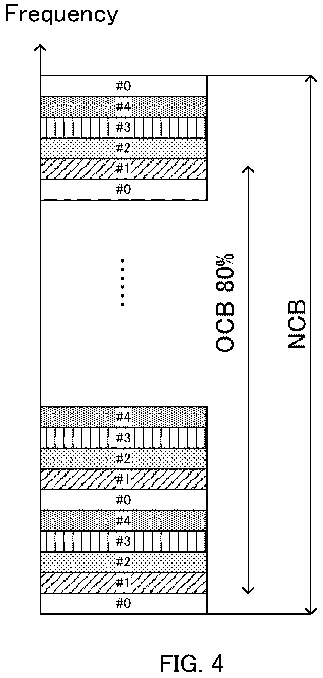

In NR-U and LAA, interlace allocation is introduced in order to satisfy this regulation. In the interlace allocation, for example, in a case where the NCB is configured as an RB set of 20 MHz, as illustrated in Table 1 and FIG. 4, there are five (M = 5) interlaces (#0 to #4) in the 20 MHz band and a single interlace has the number of PRBs (N PRBs) of 10 or 11 when the subcarrier spacing (SCS) is 30 kHz.

[Table 1]

| SCS | $M$ | $N$ PRBs |
|---|---|---|
| 15 kHz | 10 | 10 or 11 |
| 30 kHz | 5 | 10 or 11 |

It is assumed that the interlace allocation is also applied to sidelink communication in an unlicensed band, and it is expected that allocation of a subchannel, which is a unit for assigning PSSCH, and the interlace mapping are defined. Note that, in the description of a non-limiting embodiment of the present disclosure, the illustrated signals are assigned to consecutive resources in the frequency domain by way of example, but the signals may be assigned using interlaces.

In a non-limiting embodiment of the present disclosure, a description will be given of a method of appropriately transmitting additional S-SSB and additional PSFCH, and existing sidelink signals (for example, PSCCH, PSSCH, PSBCH, PSFCH, and the like) in sidelink communication in an unlicensed band.

Note that, in each embodiment described below, sidelink communication is given as an example, but the present disclosure is not limited to the sidelink communication.

[Description of Additional S-SSB]

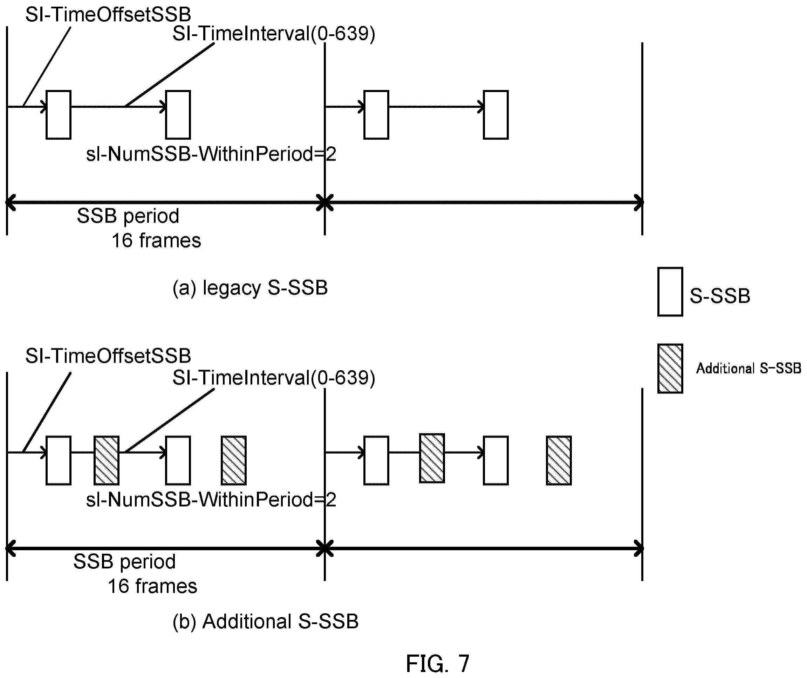

FIG. 7 illustrates exemplary transmission of additional S-SSBs.

For S-SSB, for example, 16 frames are configured for an S-SSB period, and the number of S-SSBs in the S-SSB period is specified by a parameter called "sl-NumSSB-WithinPeriod" (for example, see NPL 4). In addition, the first transmission symbol of S-SSB in the SSB period is specified by a parameter called "Sl-TimeOffsetSSB", and the interval of S-SSBs in the SSB period is specified by a parameter called "SL-TimeInterval". In an unlicensed band, when transmission of S-SSB fails due to LBT failure, UE cannot transmit the S-SSB. Therefore, it is studied to add an additional S-SSB for the purpose of increasing the opportunity to transmit S-SSB.

The following options are under study as a method of specifying a time resource of an additional S-SSB.

- Option 1: Reuse legacy NR SL design, and increase the available values in sl-NumSSB-WithinPeriod for each SCS
- Option 2: Each R16/R17 NR SL S-SSB slot has K corresponding additional candidate S-SSB occasion, and the gap between them is (pre-)configured

FFS details, e.g., value of K, details on gap length, etc.

- Option 3: The number and location(s) of additional candidate S-SSB occasions are separately (pre-)configured
- Option 4: Introduce M contiguous candidate S-SSB occasions in one S-SSB period
- Option 5: the number of candidate S-SSB occasions is (pre-)configured, and locations are determined based on the (pre-)configured number

**[0053]** In addition, the following is being studied as to whether an additional S-SSB is transmitted in a case where the existing S-SSB (for example, also referred to as "R16/R17 S-SSB") is not transmitted (that is, whether an additional S-SSB is not transmitted in a case where the existing S-SSB is transmitted) or whether an additional S-SSB can be transmitted without depending on the transmission of the existing S-SSB.

- Alt 1: UE attempts to transmit on all or some of additional candidate S-SSB occasion(s) only when it fails to transmit on R16/R17 S-SSB occasion(s)
- Alt 2: UE attempts to transmit on all additional candidate S-SSB occasion(s) regardless of whether or not it transmitted on R16/R17 S-SSB occasion(s)
- Alt 3: UE can attempt to transmit on all or some of additional candidate S-SSB occasion(s) regardless of whether or not it transmitted on R16/R17 S-SSB occasion(s)
- Alt 4: upon LBT failure on a (candidate) S-SSB occasion, a UE attempts to transmit on the subsequent additional candidate S-SSB occasion if within a period S-SSB transmission has not been transmitted in any prior occasions

The existing S-SSB is included in a configuration of SL-BWP, but is not included in a resource pool. This is to prevent a terminal that transmits another signal in a slot where S-SSB is transmitted from causing interference since it is assumed that S-SSB is always transmitted in a licensed band.

Meanwhile, in Alt1/Alt3/Alt4 described above, an additional S-SSB may not be transmitted. For example, in a case where a slot for transmitting an additional S-SSB is not included in a resource pool as is the case with the existing S-SSB, the resource cannot be used for transmission and reception of another channel even when the additional S-SSB is not transmitted. Thus, it is assumed that an additional S-SSB is included in a resource pool, unlike the existing S-SSB. In a case where an additional S-SSB is included in a resource pool, it is desirable to avoid interference (or collision) between the additional S-SSB and another channel (for example, PSCCH and/or PSSCH).

(Embodiment 1)

[Overview of Communication System]

A communication system according to the present embodiment includes base station 100 and terminal 200.

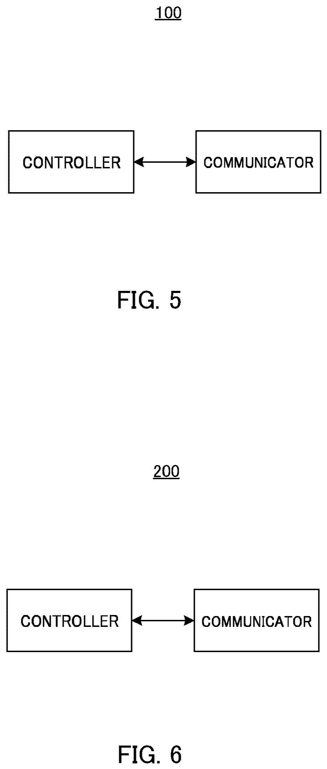

FIG. 5 is a block diagram illustrating an exemplary configuration of a part of base station 100. In base station 100 illustrated in FIG. 5, a controller controls communication via a link called Uu between terminal 200 and base station 100. A communicator transmits a signal via a link called Uu under the control of the controller. Further, the controller may perform control related to sidelink communication among a plurality of terminals

FIG. 6 is a block diagram illustrating an exemplary configuration of a part of terminal 200 (for example, corresponding to a communication apparatus). In terminal 200 illustrated in FIG. 6, a controller (for example, corresponding to control circuitry) determines allocation of a resource that does not collide with an additional S-SSB (for example, a synchronization signal block) to a signal (for example, PSCCH and PSSCH) other than the additional S-SSB in a slot (time resource) where the additional S-SSB can be mapped in a resource pool used for sidelink communication (for example, terminal-to-terminal communication) in an unlicensed band. A communicator (for example, corresponding to communication circuitry) transmits or receives the signal.

In the present embodiment, an additional S-SSB is configured in a resource pool. In addition, in the following description, terminal 200 that can transmit an additional S-SSB is also referred to as "terminal A." A configuration for terminal A may be configured in an application layer called Pre-configured, may be configured in a higher layer such as a system information block (SIB) called configured and/or other radio resource control (RRC), or may be configured in medium access control (MAC).

In the present embodiment, in a case where terminal 200 transmits an additional S-SSB (or in a case where terminal 200 can transmit an additional S-SSB) in sidelink communication (also referred to as SL-U) in an unlicensed band, terminal 200 transmits another sidelink signal (for example, at least one of PSCCH and PSSCH) in the same slot as the additional S-SSB. That is, terminal A can transmit another channel (for example, PSCCH and/or PSSCH (hereinafter, also referred to as PSCCH/PSSCH)) in a slot where an additional S-SSB is can be transmitted.

On the other hand, in a case where terminal 200 (for example, terminal 200 that is not terminal A) does not transmit an additional S-SSB (or in a case where terminal 200 cannot transmit an additional S-SSB) in SL-U, terminal 200 does not transmit another sidelink signal in a slot where an additional S-SSB may be transmitted.

In this way, terminal 200 that does not transmit an additional S-SSB can always perform reception processing without performing transmission of a signal in a slot where an additional S-SSB is likely to be received. Therefore, in the present embodiment, terminal 200 can receive an additional S-SSB without collision with another signal, for example.

Exemplary operations according to the present embodiment will be described below.

[Operation Example 1]

In Operation Example 1, in a case where a slot where an additional S-SSB can be transmitted is included in COT acquired in advance by terminal A, and terminal A transmits an additional S-SSB and PSCCH/PSSCH in the same slot, Type 2A channel access procedure is applied to the additional S-SSB, and any one of Type 2A/2B/2C channel access procedures is applied to the PSCCH/PSSCH.

For example, in a case where Type 2A is applied to the PSCCH/PSSCH, the sensing time can be aligned between the additional S-SSB and the PSCCH/PSSCH (or between the RB sets in which the channels are mapped). In addition, the transmission start times of the additional S-SSB and the PSCCH/PSSCH can be aligned.

In addition, in Operation Example 1, since the slot where an additional S-SSB can be transmitted is a slot in the COT acquired by terminal A, a transmission destination terminal of the PSSCH to be transmitted simultaneously with the additional S-SSB by terminal A may be any terminal.

In addition, for example, for the transmission in the COT, terminal A may increase the length of a cyclic prefix (CP) having the initial symbol length by applying a cyclic prefix (CP) extension (CPE), and configure a guard period of the final symbol of the one previous slot to be the total of the sensing time of the channel access procedure and the length of the CP extension.

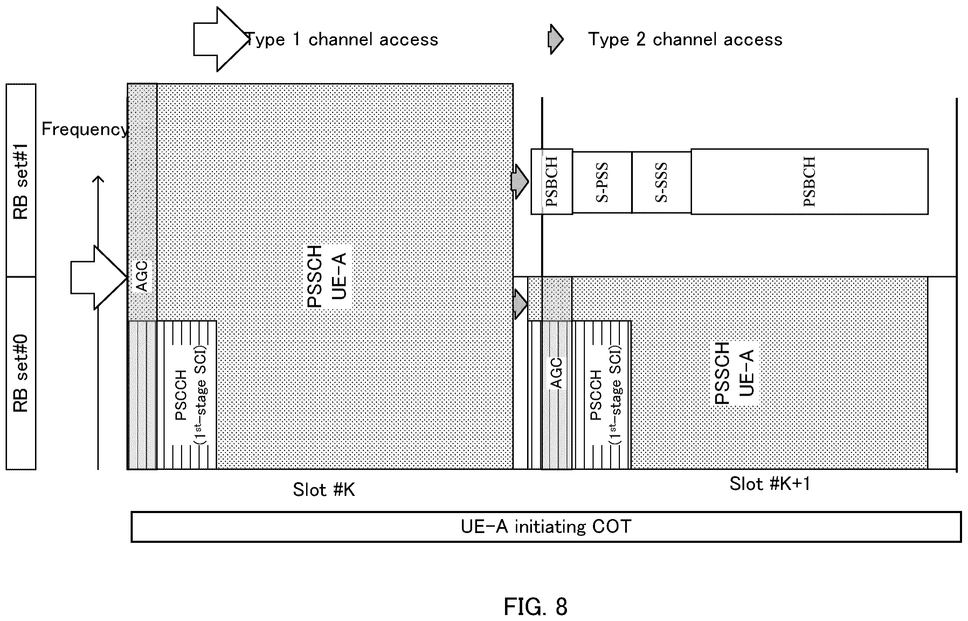

FIG. 8 illustrates exemplary channel mapping in a slot in Operation Example 1.

In FIG. 8, terminal A (UE-A) acquires COT of RB set#0 and RB set#1 in Slot #K.

Here, a resource block set (RB set) is, for example, a unit in the frequency direction for every 20 MHz and is also referred to as a carrier. Examples of the channel access procedure across a plurality of RB sets include a method (Type A multi-channel access procedures) of performing carrier sensing by Type 1 channel access procedure for each RB set (carrier) and a method (Type B multi-channel access procedure) of performing carrier sensing of Type 1 (category 4 LBT) in one RB set (carrier) and performing carrier sensing of Type 2 (category 2 LBT) in another RB set (carrier).

In FIG. 8, terminal A transmits an additional S-SSB in RB set#1 and transmits PSCCH/PSSCH in RB set#0 in Slot #K+1. In addition, in Slot #K+1 illustrated in FIG. 8, terminal 200 that cannot transmit an additional S-SSB does not transmit PSCCH/PSSCH. As a result, terminal 200 that cannot transmit an additional S-SSB can reliably receive the additional S-SSB transmitted from terminal A without performing transmission processing of PSCCH/PSSCH in Slot #K+1, for example.

Further, as described above, Type 2A channel access procedure can be used for S-SSB both inside and outside the COT. Note that, inside the COT, Type 2B or Type 2C may be applied to S-SSB. In addition, since Slot #K+1 is within the COT, terminal A also applies Type 2 channel access procedure to RB set #0 for transmitting the PSCCH/PSSCH.

As described above, according to Operation Example 1, the sensing time and the transmission start time can be aligned between the additional S-SSB and the PSCCH/PSSCH. In addition, according to Operation Example 1, it is possible to avoid the collision between the additional S-SSB and the PSCCH/PSSCH.

[Operation Example 2]

In Operation Example 2, in a case where a slot where an additional S-SSB can be transmitted is included in COT acquired by another terminal (for example, "terminal B") other than terminal A, and terminal A transmits an additional S-SSB and PSCCH/PSSCH in the same slot, Type 2A channel access procedure is applied to the additional S-SSB, and any one of Type 2A/2B/2C channel access procedures is applied to the PSCCH/PSSCH.

For example, in a case where Type 2A is applied to the PSCCH/PSSCH, the sensing time can be aligned between the additional S-SSB and the PSCCH/PSSCH (or between the RB sets in which the channels are mapped).

In addition, in Operation Example 2, since the slot where an additional S-SSB can be transmitted is a slot in the COT acquired by terminal B, terminal A can transmit the PSCCH/PSSCH when terminal B is included in the transmission destination of the PSSCH. On the other hand, terminal A transmits the additional S-SSB and does not transmit the PSCCH/PSSCH when terminal B is not included in the transmission destination of the PSSCH.

Note that terminal A may determine whether terminal B is included in the transmission destination of the PSSCH based on, for example, the source ID or the destination ID, or may determine the same from identification of the terminal in an application layer.

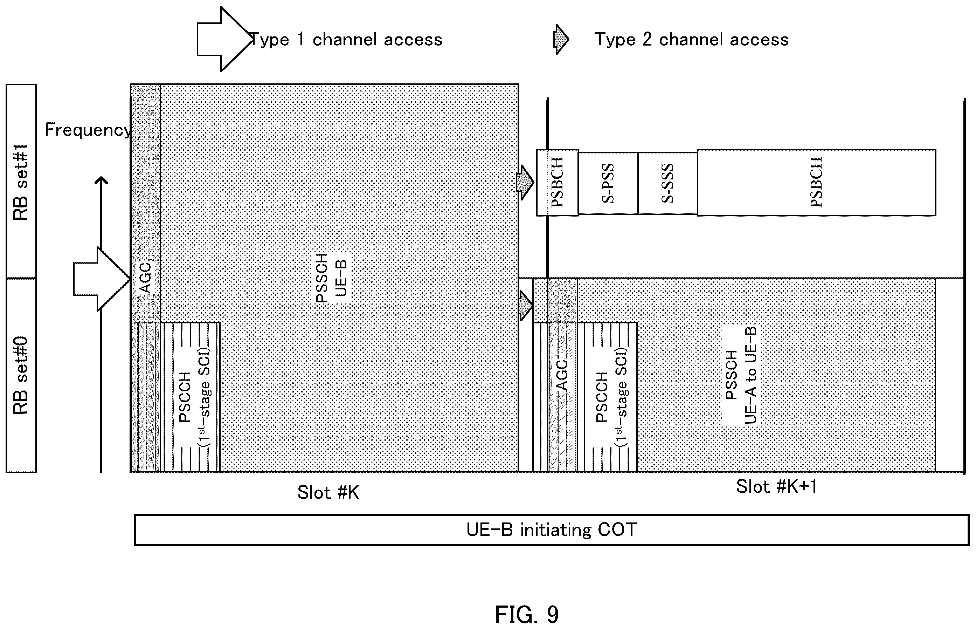

FIG. 9 illustrates exemplary channel mapping in a slot in Operation Example 2.

In FIG. 9, terminal B (UE-B) acquires the COT of RB set#0 and RB set#1 by Type 1 channel access procedure in Slot #K.

In addition, in FIG. 9, terminal A (UE-A) transmits an additional S-SSB in RB set#1 and transmits PSCCH/PSSCH whose transmission destination includes terminal B in RB set#0 in Slot #K+1, as in FIG. 8.

Here, in a case where terminal B is not a terminal that can transmit an additional S-SSB, terminal B does not transmit a signal (for example, PSCCH/PSSCH) in the slot (for example, Slot #K+1) configured for an additional S-SSB even in a slot in the COT acquired by terminal B. As a result, terminal B that cannot transmit an additional S-SSB can reliably receive the additional S-SSB transmitted from terminal A without performing transmission processing of PSCCH/PSSCH in Slot #K+1, for example.

In addition, for example, Type 2A channel access procedure can be used for S-SSB both inside and outside the COT. Note that, inside the COT, Type 2B or Type 2C may be applied to S-SSB. Further, since Slot #K+1 is within the COT, terminal A also applies Type 2 channel access procedure to RB set #0 for transmitting the PSCCH/PSSCH.

As described above, according to Operation Example 2, the sensing time and the transmission start time can be aligned between the additional S-SSB and the PSCCH/PSSCH. In addition, according to Operation Example 2, it is possible to avoid the collision between the additional S-SSB and the PSCCH/PSSCH.

[Operation Example 3]

In Operation Example 3, in a case where a slot where an additional S-SSB can be transmitted is outside the COT, and terminal A transmits an additional S-SSB and PSCCH/PSSCH in the same slot, terminal A needs to acquire COT.

In this case, Type 1 channel access procedure is applied to the PSCCH/PSSCH. Meanwhile, Type 2A channel access procedure can be applied to the additional S-SSB even outside the COT. That is, in a case where a slot where an additional S-SSB can be transmitted is outside the COT, terminal A applies Type 2 channel access procedure to the additional S-SSB and applies Type 1 channel access procedure to the PSCCH/PSSCH.

In addition, for example, terminal A may align the transmission start times of the additional S-SSB and the PSCCH/PSSCH. In Operation Example 3, since the transmission is performed outside the COT, terminal A may start transmission from the beginning of the slot without applying CP extension. Further, terminal A may change the length of CP extension depending on the priority or the like.

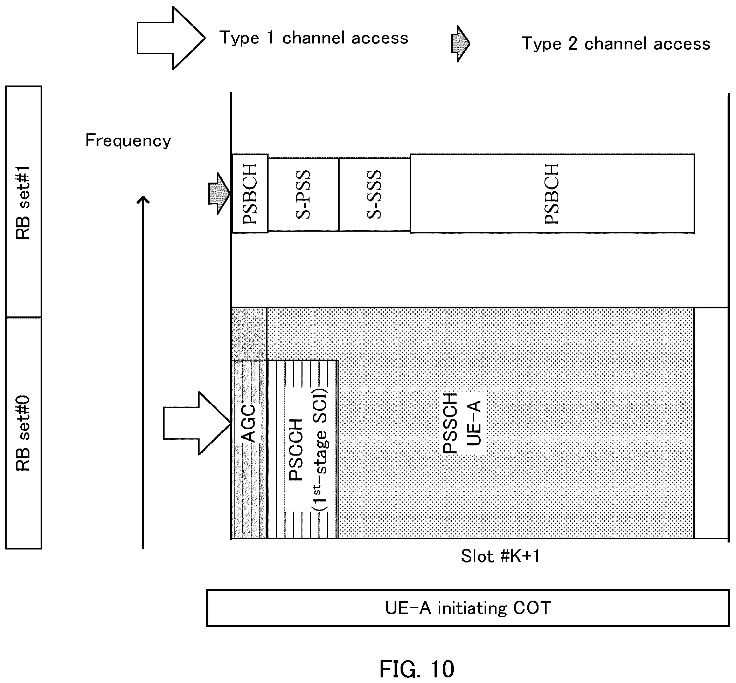

FIG. 10 illustrates exemplary channel mapping in a slot in Operation Example 3.

In FIG. 10, terminal A (UE-A) transmits an additional S-SSB in RB set#1 and transmits PSCCH/PSSCH in RB set#0 in Slot #K+1.

Here, for example, since Type 2A channel access procedure can be used for S-SSB even outside the COT, terminal A applies Type 2A channel access procedure to the additional S-SSB also in FIG. 10. On the other hand, it is necessary to acquire COT for the transmission of the PSCCH/PSSCH, and thus, terminal A applies Type 1 channel access procedure to RB set #0.

In this case, terminal A is in the state of having acquired COT for RB set#0, but may be in the state of not having acquired COT for RB set#1, since Type 1 channel access procedure has not been performed. In addition, as a variation, terminal A may apply Type A multi-channel access procedures. In this case, terminal A performs Type 1 channel access procedure in RB set#0 and performs Type 2 channel access procedure in RB set#1, and thus terminal A may be in the state of having acquired COT of RB set#0 and RB set#1.

In addition, in Slot #K+1 illustrated in FIG. 10, terminal 200 that cannot transmit an additional S-SSB does not transmit PSCCH/PSSCH. As a result, terminal 200 that cannot transmit an additional S-SSB can reliably receive the additional S-SSB transmitted from terminal A without performing transmission processing of PSCCH/PSSCH in Slot #K+1, for example.

As described above, according to Operation Example 3, the transmission start can be aligned between the RB set in which the additional S-SSB is transmitted and the RB set in which the PSCCH/PSSCH is transmitted although the sensing time for the channel access procedure differs. Further, according to Operation Example 3, it is possible to avoid the collision between the additional S-SSB and the PSCCH/PSSCH.

[Operation Example 4]

In Operation Example 4, an operation example in which terminal A transmits an additional S-SSB will be described.

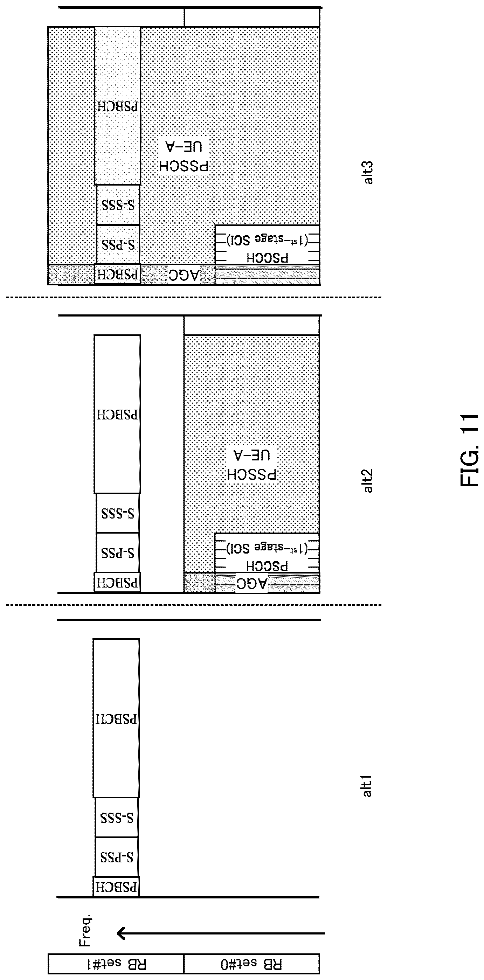

FIG. 11 illustrates exemplary channel mapping in a slot in Operation Example 4.

In Alt1 of FIG. 11, when terminal A transmits an additional S-SSB, terminal A does not transmit PSCCH/PSSCH in a slot where the additional S-SSB is transmitted. This allows terminal A to avoid simultaneous transmission of different channels. In addition, for example, in a case where beams are different between the additional S-SSB and the PSCCH/PSSCH, terminal A can avoid simultaneous transmission of two different beams.

In Alt2 of FIG. 11, when terminal A transmits an additional S-SSB, terminal A can transmit PSCCH/PSSCH in RB set#0 different from RB set#1 for transmitting the additional S-SSB in a slot where the additional S-SSB is transmitted. On the other hand, when terminal A transmits the additional S-SSB, terminal A does not transmit the PSCCH/PSSCH in RB set#1 for transmitting the additional S-SSB. This reduces the interference amount in the RB set in which the additional S-SSB is transmitted, for example, in a case where an additional S-SSB is also transmitted from a terminal other than terminal A. In addition, terminal A can concentrate the transmission power allocation for the additional S-SSB in the RB set (for example, RB set#1) for transmitting the additional S-SSB, thereby improving the line quality of the S-SSB signal.

In Alt3 of FIG. 11, when terminal A transmits an additional S-SSB, terminal A can transmit PSCCH/PSSCH in a resource (for example, PRB, subcarrier, or resource element (RE)) other than the resource allocated to the additional S-SSB in the RB set (for example, RB set#1) for transmitting the additional S-SSB. This improves the resource utilization efficiency.

Alt 1, Alt 2, and Alt 3 have been described, thus far.

Note that, in a case of Alt 3, terminal 200 (terminal A) buffers all the RB sets in the resource pool.

In addition, although the above Operation Examples 1 to 3 have described the operations of the channel access procedure based on the resource mapping to which the example of Alt2 of Operation Example 4 is applied, the present disclosure is not limited to this. For example, Alt3 can also be applied to Operation Example 1 and Operation Example 2, and terminal A may apply Type 2 channel access procedure to the RB set including the additional S-SSB and the PSCCH/PSSCH.

Further, in a case where Alt 3 is applied to Operation Example 3, the PSCCH/PSSCH is transmitted in the RB set in which the additional S-SSB is transmitted, so that terminal A needs to acquire COT by Type A multi-channel access procedures or Type B multi-channel access procedures. In a case where Type A multi-channel access procedures are applied, terminal A performs Type 1 channel access procedure even in the RB set in which the additional S-SSB is mapped. In a case where Type B multi-channel access procedures are applied, terminal A may perform Type 2 channel access procedure in the RB set in which the additional S-SSB and the PSCCH/PSSCH are mapped, and perform Type 1 channel access procedure in the RB set in which the PSCCH/PSSCH is mapped and the additional S-SSB is not mapped.

[Operation Example 5]

In Operation Example 5, a description will be given of an operation example in which terminal A does not transmit an additional S-SSB in a slot where an additional S-SSB can be transmitted. For example, terminal A may not transmit an additional S-SSB when transmitting the existing S-SSB.

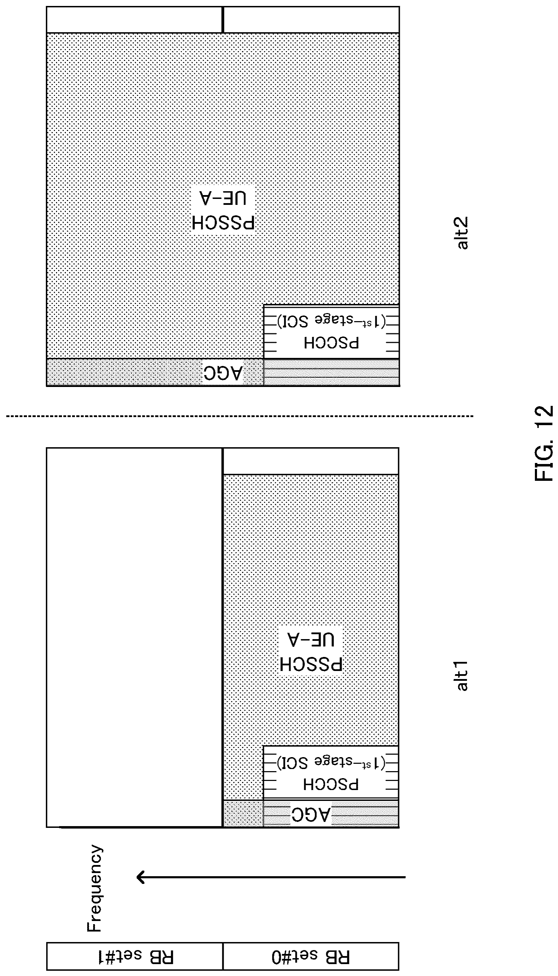

FIG. 12 illustrates exemplary channel mapping in a slot in Operation Example 5.

In Alt1 of FIG. 12, when terminal A does not transmit an additional S-SSB, terminal A can transmit PSCCH/PSSCH in RB set#0 different from RB set#1 in which the additional S-SSB can be transmitted. On the other hand, when terminal A does not transmit an additional S-SSB, terminal A does not transmit PSCCH/PSSCH in RB set#1 in which the additional S-SSB can be transmitted.

As a result, for example, in a case where an additional S-SSB is transmitted from a terminal other than terminal A, it is possible to avoid causing interference to the additional S-SSB transmitted from the terminal.

Note that, for example, whether another terminal transmits an additional S-SSB can also be detected by sensing of a channel access procedure, but in a case where there is a terminal that cannot be detected by terminal A, such as a hidden terminal, terminal A possibly starts transmission without being aware that another terminal is transmitting an additional S-SSB. In Operation Example 5, terminal A can avoid causing interference to an additional S-SSB transmitted from another terminal by not transmitting another signal in the RB set in which an additional S-SSB can be transmitted even in a case where terminal A does not transmit an additional S-SSB in a slot where the additional S-SSB can be transmitted.

In Alt2 of FIG. 12, in a case where terminal A does not transmit an additional S-SSB, terminal A can transmit PSCCH/PSSCH in the RB set in which the additional S-SSB can be transmitted. This improves the resource utilization efficiency.

The exemplary operations according to the present embodiment have been described, thus far.

[Configuration of Terminal 200]

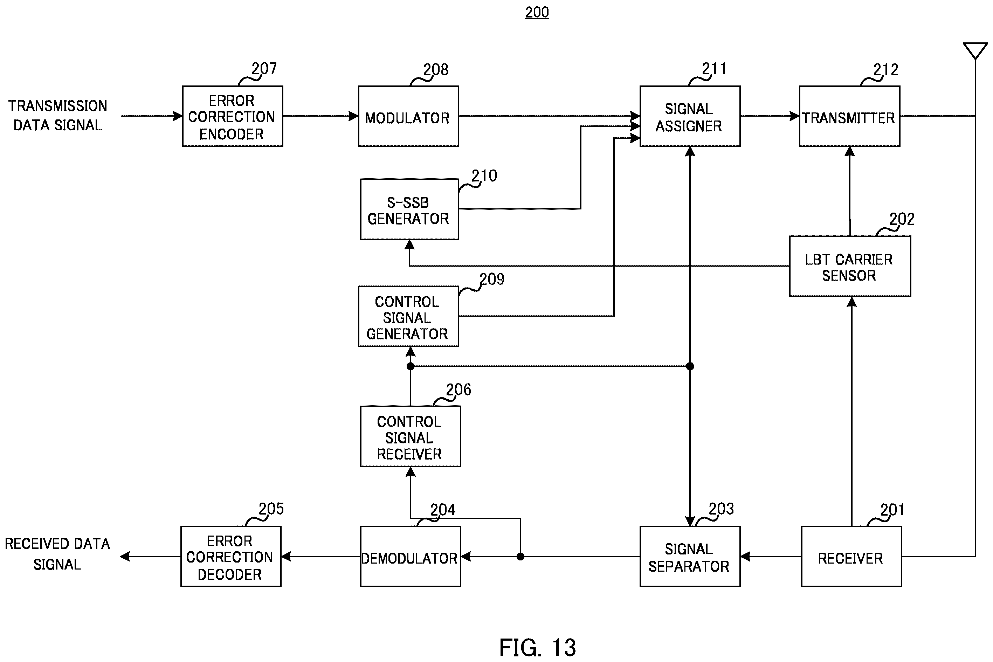

FIG. 13 is a block diagram illustrating an exemplary configuration of terminal 200 according to the present embodiment. Terminal 200 illustrated in FIG. 13 includes receiver 201, LBT carrier sensor 202, signal separator 203, demodulator 204, error correction decoder 205, control signal receiver 206, error correction encoder 207, modulator 208, control signal generator 209, S-SSB generator 210, signal assigner 211, and transmitter 212.

Note that at least one of LBT carrier sensor 202, signal separator 203, demodulator 204, error correction decoder 205, control signal receiver 206, control signal generator 209, error correction encoder 207, modulator 208, S-SSB generator 210, and signal assigner 211 may be included in the controller illustrated in FIG. 6. In addition, at least one of receiver 201 and transmitter 212 may be included in the communicator illustrated in FIG. 6.

Terminal 200 may be a transmission terminal (or a transmission source terminal) that transmits a sidelink signal in sidelink communication or may be a reception terminal (or a destination terminal) that receives a sidelink signal.

Receiver 201 receives a received signal via an antenna, and performs reception processing such as down-conversion on the received signal. The received signal may be, for example, a sidelink signal including S-SSB (existing S-SSB or additional S-SSB) and/or PSSCH/PSCCH. Note that the sidelink signal may include PSFCH. Further, the received signal received by receiver 201 may include an idle period or may include a signal other than a sidelink signal (for example, downlink signal from base station 100). Receiver 201 outputs the received signal after the reception processing to LBT carrier sensor 202 and signal separator 203.

LBT carrier sensor 202 performs carrier sensing (also referred to as LBT) based on the received signal input from receiver 201. LBT carrier sensor 202 may determine, based on the received signal, whether the channel state is "busy (or LBT failure)" or "idle (or LBT OK)." In other words, LBT carrier sensor 202 may determine whether the channel is available based on the received signal input from receiver 201. For example, LBT carrier sensor 202 may perform short carrier sensing called Type 2 channel access procedure before transmitting S-SSB and before transmitting a signal in an acquired COT, and may perform long carrier sensing called Type 1 channel access procedure before acquiring COT and transmitting a signal. LBT carrier sensor 202 outputs information indicating the determined channel state to transmitter 212. In addition, LBT carrier sensor 202 outputs the result of the carrier sensing related to the S-SSB signal to S-SSB generator 210.

Signal separator 203 outputs, to demodulator 204, a received data signal of the received signal input from receiver 201, separates the 1st stage SCI mapped on the PSCCH and the 2nd stage SCI mapped on a part of the PSSCH, and outputs the separated information to control signal receiver 206.

Demodulator 204 performs demodulation processing on the reception data signal input from signal separator 203. Demodulator 204 outputs the demodulated signal obtained through the demodulation processing to error correction decoder 205.

Error correction decoder 205 decodes the demodulated signal input from demodulator 204 and outputs the decoded signal as reception data.

Control signal receiver 206 specifies (or grasps) resource allocation information including a reserved resource, based on the 1st stage SCI included in the signal input from signal separator 203. For example, control signal receiver 206 outputs, to signal assigner 211, the resource allocation information to avoid overlap with another resource. Further, control signal receiver 206 specifies (or grasps) the transmission ID and the reception ID based on the 2nd stage SCI included in the signal input from signal separator 203. Control signal receiver 206 determines whether resource allocation for terminal 200 is present, based on the specified transmission ID and reception ID. In a case where the resource allocation for terminal 200 is present, control signal receiver 206 instructs signal separator 203 to separate the received signal. In addition, control signal receiver 206 determines whether to perform transmission in COT acquired by another terminal or whether terminal 200 acquires COT based on the information related to COT included in the 1st stage SCI and the transmission ID included in the 2nd stage SCI, and outputs the information related to COT including the determination result to signal assigner 211 and control signal generator 209.

Error correction encoder 207 inputs a data signal, performs error correction encoding on the data signal and outputs the data signal subjected to the error correction encoding to modulator 208.

Modulator 208 modulates the signal input from error correction encoder 207 and outputs the modulated signal to signal assigner 211.

Control signal generator 209 generates signals of the 1st stage SCI and the 2nd stage SCI based on control information, which is not illustrated. In addition, control signal generator 209 generates information related to COT based on the information input from control signal receiver 206. Control signal generator 209 outputs the generated information to signal assigner 211.

S-SSB generator 210 generates signals of S-SSB composed of S-PSS, S-SSS, and PSBCH, and outputs the generated signals to signal assigner 211. In addition, S-SSB generator 210 generates an additional S-SSB and outputs the additional S-SSB to signal assigner 211 in a case where transmission of S-SSB has failed, for example, based on the information (for example, information indicating whether the S-SSB can be transmitted) input from LBT carrier sensor 202.

Signal assigner 211 assigns, to a resource, the signal input from modulator 208, the signal (for example, the S-SSB signal or the additional S-SSB signal) input from S-SSB generator 210, or the signal input from control signal generator 209. In addition, signal assigner 211 may configure (for example, change) the CP length of the signal based on, for example, the information related to COT input from control signal receiver 206. For example, signal assigner 211 may not add the CP length in a case of acquiring COT, and may increase the CP length in a case of transmission in an acquired COT. In addition, for example, signal assigner 211 may not assign another signal in a slot in which the S-SSB signal is transmitted. Further, signal assigner 211 may assign the PSCCH/PSSCH to the same slot as the additional S-SSB signal in accordance with the conditions of the operation examples described above, for example, in a slot in which transmission of the additional S-SSB signal is scheduled. Signal assigner 211 outputs a transmission signal to transmitter 212 after the resource allocation.

In a case where the result of the sensing acquired from LBT carrier sensor 202 indicates the idle state, transmitter 212 performs transmission processing such as up-conversion on the transmission signal input from signal assigner 211, and transmits the transmission signal after the transmission processing via an antenna.

As described above, in the present embodiment, in a slot in which an additional S-SSB mapped in a resource pool used for sidelink communication in an unlicensed band can be transmitted, terminal 200 determines resource allocation for a signal (for example, PSCCH/PSSCH) other than the additional S-SSB so that the signal does not collide with the additional S-SSB. For example, terminal 200 determines to transmit PSCCH/PSSCH in a case where terminal 200 can transmit an additional S-SSB (for example, in a case where terminal 200 is terminal A), and does not transmit PSCCH/PSSCH in a case where terminal 200 cannot transmit an additional S-SSB (for example, in a case where terminal 200 is not terminal A).

This makes it possible to avoid collision between an additional S-SSB and PSCCH/PSSCH when terminal 200 transmits or receives the additional S-SSB, so that terminal 200 can appropriately transmit the additional S-SSB and the existing sidelink signal (for example, PSCCH/PSSCH) in sidelink communication in an unlicensed band. Therefore, according to the present embodiment, the resource utilization efficiency for sidelink communication in an unlicensed band can be improved.

(Embodiment 2)

Base station 100 and terminal 200 according to the present embodiment may have the same configurations as those in Embodiment 1.

In the present embodiment, an additional S-SSB is configured in a resource pool. In the following description, terminal 200 that can transmit an additional S-SSB is referred to as "terminal A." In addition, terminal 200 that cannot transmit an additional S-SSB is referred to as "terminal B." A configuration of terminal A (or a configuration of terminal B) may be configured in an application layer called pre-configured, may be configured in a higher layer such as SIB called configured and/or other RRC, or may be configured in MAC.

In the present embodiment, terminal B can transmit a channel signal (for example, PSCCH/PSSCH) when sensing of a channel access procedure is successful (idle) in a slot in which an additional S-SSB is likely to be transmitted.

In addition, in the present embodiment, the CP extension length of an additional S-SSB is configured to be longer than the CP extension length of PSCCH/PSSCH. This makes it easy for terminal B to detect the presence or absence of transmission of the additional S-SSB.

Hereinafter, operation examples according to the present embodiment will be each described.

[Operation Example 1]

In Operation Example 1, in a slot in which an additional S-SSB is likely to be transmitted from terminal A, terminal B starts to transmit PSCCH/PSSCH when sensing of a channel access procedure is successful (idle) in an RB set for transmitting the PSCCH/PSSCH and an RB set in which the additional S-SSB is likely to be transmitted from terminal A.

On the other hand, in the slot in which the additional S-SSB is likely to be transmitted from terminal A, terminal B does not transmit PSCCH/PSSCH when the sensing of the channel access procedure fails (busy) in the RB set for transmitting the PSCCH/PSSCH and the RB set in which the additional S-SSB is likely to be transmitted from terminal A.

For example, even in a case where the RB set in which the additional S-SSB is likely to be transmitted and the RB set for transmitting the PSCCH/PSSCH are different from each other, terminal B does not transmit the PSCCH/PSSCH when the additional S-SSB is actually transmitted. As described above, in Operation Example 1, it is possible to prevent the additional S-SSB and the PSCCH/PSSCH from being transmitted in the same slot. For example, in a case where terminal B cannot perform transmission and reception at the same time due to the half duplex issue, in Operation Example 1, terminal B does not transmit PSCCH/PSSCH (for example, terminal B can perform reception processing) when the additional S-SSB is transmitted from terminal A, and thus terminal B can receive the additional S-SSB.

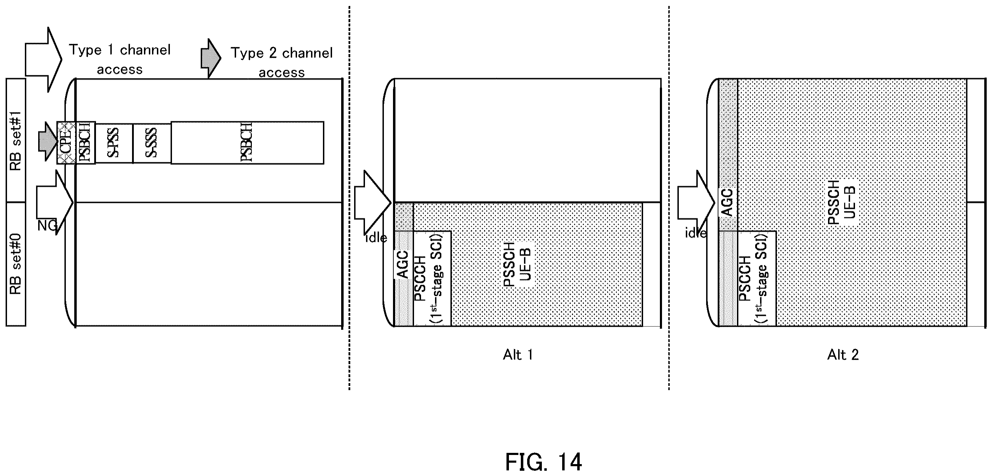

FIG. 14 illustrates exemplary channel mapping in a slot in Operation Example 1.

As illustrated in FIG. 14, in a slot where an additional S-SSB is likely to be transmitted, the CP extension (CPE) longer than that for PSCCH/PSSCH is configured (or added) for the S-SSB. This allows terminal A to start transmitting the S-SSB from before the boundary of the slot, and thus the transmission is given a higher priority than another channel (for example, PSCCH/PSSCH).

Terminal B performs sensing of a channel access procedure in the frequency region including RB set#1 in which the additional S-SSB can be transmitted by terminal A and RB set#0 in which terminal B is scheduled to transmit PSCCH/PSSCH. In FIG. 14, Type 1 channel access procedure is applied assuming the transmission outside the COT, but Type 2 channel access procedure may be applied in a case where the transmission is performed inside the COT.

Terminal B does not start to transmit PSCCH/PSSCH when a signal is detected (when LBT is NG) by the sensing of the channel access procedure. For example, as illustrated in FIG. 14, in a case where terminal A transmits the additional S-SSB, terminal A can start transmitting the additional S-SSB from before the boundary of the slot by using CPE; accordingly, LBT is NG even though terminal B performs the sensing (for example, Type 1 channel access procedure), and terminal B does not transmit PSCCH/PSSCH. In this case, terminal B may change to a reception mode and receive the additional S-SSB, for example, in a case where reception of the additional S-SSB is intended.

In addition, terminal B may start to transmit PSCCH/PSSCH when no signal is detected (when LBT is OK) by the sensing of the channel access procedure. For example, in a case where terminal A does not transmit the additional S-SSB, LBT is OK when terminal B performs the sensing (for example, Type 1 channel access procedure), and thus terminal B can transmit PSCCH/PSSCH.

For example, in Alt1 of FIG. 14, terminal B may transmit PSCCH/PSSCH in RB set#0 different from RB set#1 in which the additional S-SSB is likely to be mapped. As a result, even in a case where terminal B cannot detect a signal in the sensing of the channel access procedure, it is possible to prevent the signal of terminal B from interfering with the additional S-SSB even when another terminal transmits the S-SSB in RB set#1.

Further, for example, in Alt2 of FIG. 14, terminal B may transmit PSCCH/PSSCH in the RB sets (for example, RB sets#0 and #1) including the RB set in which the additional S-SSB is likely to be mapped. This improves the resource utilization efficiency.

[Operation Example 2]

In Operation Example 2, in a slot in which an additional S-SSB is likely to be transmitted from terminal A, terminal B starts to transmit PSCCH/PSSCH when the sensing of the channel access procedure is successful (idle) in the RB set for transmitting the PSCCH/PSSCH. In Operation Example 2, terminal B may not perform the sensing of the channel access procedure in the RB set in which the additional S-SSB is likely to be transmitted from terminal A.

In this way, the additional S-SSB transmitted by terminal A and the PSCCH/PSSCH transmitted by terminal B are transmitted in the same slot, thereby improving the resource utilization efficiency.

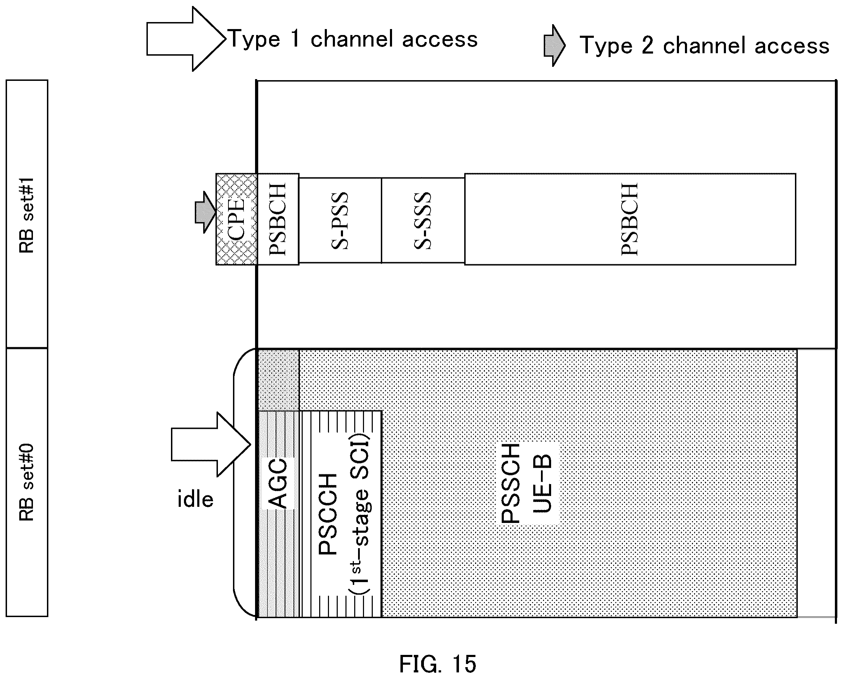

FIG. 15 illustrates exemplary channel mapping in a slot in Operation Example 2.

As illustrated in FIG. 15, in a slot where an additional S-SSB is likely to be transmitted, the CPE longer than that for PSCCH/PSSCH is configured (or added) for the S-SSB. This allows terminal A to start transmitting the S-SSB from before the boundary of the slot, and thus the transmission is given a higher priority than another channel (for example, PSCCH/PSSCH).

Terminal B performs the sensing of the channel access procedure in the frequency region that does not include RB set#1 in which the additional S-SSB can be transmitted by terminal A and includes RB set#0 in which terminal B is scheduled to transmit PSCCH/PSSCH. In FIG. 15, Type 1 channel access procedure is applied assuming the transmission outside the COT, but Type 2 channel access procedure may be applied in a case where the transmission is performed inside the COT.

Terminal B does not start to transmit the PSCCH/PSSCH when a signal is detected (when LBT is NG) by the sensing of the channel access procedure in RB set#0. In addition, terminal B starts to transmit the PSCCH/PSSCH when no signal is detected (when LBT is OK) by the sensing of the channel access procedure in RB set#0.

In this way, the additional S-SSB transmitted by terminal A and the PSCCH/PSSCH transmitted by terminal B are mapped in the same slot, thereby improving the resource utilization efficiency.

Note that, for example, in a case where terminal B is also scheduled to perform transmission in RB set#1 in FIG. 15, the same operation as in Alt2 of Operation Example 1 is applied. Terminal B performs the carrier sensing of the channel access procedure also in RB set#1, does not start the transmission when the result of the sensing of the channel access procedure is NG, and starts the transmission when the result of the sensing of the channel access procedure is the channel state idle. For example, in a case where terminal A transmits the additional S-SSB in RB set#1, terminal A can transmit the additional S-SSB from before the boundary of the slot with priority over another terminal by using the CPE; accordingly, the result of the sensing of the channel access procedure is NG, and it is thus possible to avoid collision between the additional S-SSB and another signal.

The exemplary operations according to the present embodiment have been described, thus far.

As described above, in the present embodiment, in a slot in which an additional S-SSB mapped in a resource pool used for sidelink communication in an unlicensed band can be transmitted, terminal 200 determines resource allocation for a signal (for example, PSCCH/PSSCH) other than the additional S-SSB so that the signal does not collide with the additional S-SSB.

For example, in terminal A, the CPE for the additional S-SSB is configured to be longer than the CPE for another signal in a slot where the additional S-SSB can be transmitted. As a result, the additional S-SSB is transmitted with priority over another signal (for example, PSCCH/PSSCH), and thus it is possible to avoid the collision between the additional S-SSB and the PSCCH/PSSCH.

In addition, for example, terminal B determines to transmit PSCCH/PSSCH when carrier sensing results in the idle state in a slot where the additional S-SSB can be transmitted. As a result, terminal B can transmit the PSCCH/PSSCH while avoiding the collision with the additional S-SSB in the slot where the additional S-SSB can be transmitted, thereby improving the resource utilization efficiency.

Therefore, according to the present embodiment, it is possible to improve the utilization efficiency of a resource for sidelink communication in an unlicensed band.

Note that, in the present embodiment, in a case where terminal B intends to receive an additional S-SSB, terminal B may receive the additional S-SSB without transmitting PSCCH/PSSCH even when transmission of the PSCCH/PSSCH is scheduled.

In addition, for example, in a case where terminal A transmits PSCCH/PSSCH in a slot for transmitting an additional S-SSB, the CP extension length for the PSCCH/PSSCH may be configured to be longer than that for another signal, as is the case with the CP extension length for the additional S-SSB. The length of the CPE of the PSCCH/PSSCH may be aligned with, for example, the CPE length of the additional S-SSB. In this way, the PSCCH/PSSCH of terminal A is transmitted with priority over the PSCCH/PSSCH of terminal B, so that Embodiment 1 and Embodiment 2 can be used in combination.

(Variation 1 of Embodiments 1 and 2)

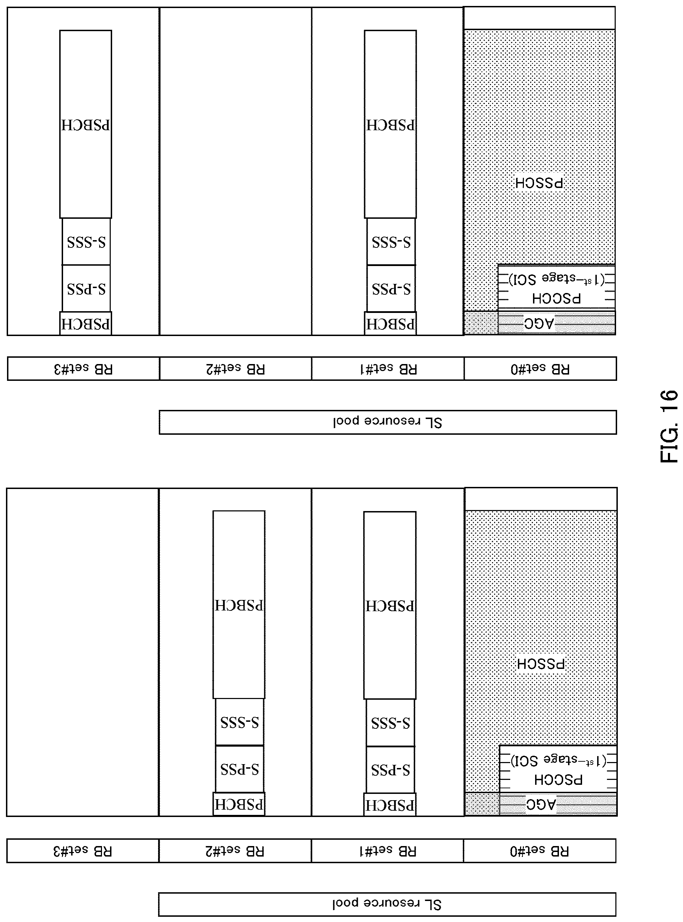

For example, as illustrated on the left side of FIG. 16, an additional S-SSB may be mapped in the frequency region (for example, any one of RB sets#0 to #2) included in the SL resource pool and may not be mapped in the frequency region (for example, RB set#3) not included in the SL resource pool.

Alternatively, for example, as illustrated on the right side of FIG. 16, an additional S-SSB may also be mapped in the frequency region (for example, RB set#3) not included in the SL resource pool. In a case where the additional S-SSB is also mapped in the frequency region not included in the SL resource pool, PSCCH/PSSCH may be mapped in the resource pool (for example, any one of RB sets#0 to #2) and may not be mapped in the frequency region (for example, RB set#3) not included in the resource pool. In this case, Embodiment 1 and Embodiment 2 can be applied.

(Variation 2 of Embodiments 1 and 2)

In sidelink communication, periodic resource allocation is possible. For example, each terminal 200 recognizes that the frequency resource allocation indicated by the Frequency resource assignment included in the 1st stage SCI is repeated at a period indicated by the Resource reservation period, and can avoid collision of the resources. In a case where a periodic resource (for example, a slot) overlaps with a slot of an additional S-SSB included in a resource pool, the resource allocation possibly collides with each other.

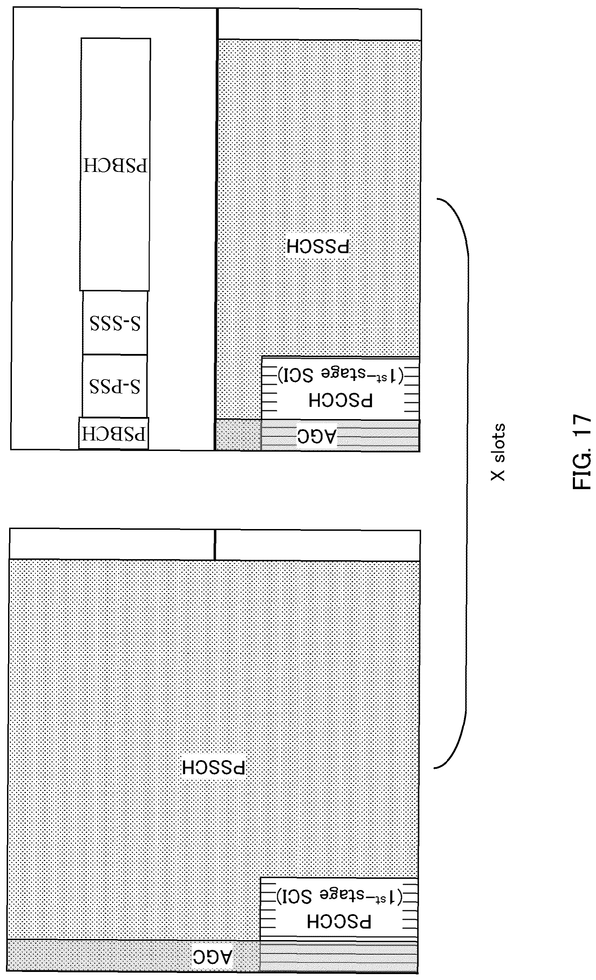

Therefore, for example, as illustrated in FIG. 17, in a case where the periodic resource allocation is performed, when resource allocation indicated by the 1st stage SCI and a resource (for example, a slot or an RB set) in which an additional S-SSB is mapped overlap with each other in a slot in which a slot of the additional S-SSB and a periodic resource allocated by the 1st stage SCI overlap with each other, terminal 200 may determine that PSCCH/PSSCH is not actually assigned to the RB set.

In FIG. 17, the period of the resource allocation is set to X slots. As illustrated in FIG. 17, when the resource allocation indicated by the 1st stage SCI and the RB set in which the additional S-SSB is mapped do not overlap with each other, terminal 200 may transmit PSCCH/PSSCH in accordance with the resource allocation indicated by the 1st stage SCI. On the other hand, as illustrated in FIG. 17, when the resource allocation indicated by the 1st stage SCI and the RB set in which the additional S-SSB is mapped overlap with each other, terminal 200 may not transmit PSCCH/PSSCH in the RB set in which the additional S-SSB is mapped, among the resource allocation indicated by the 1st stage SCI, and may transmit PSCCH/PSSCH in an RB set other than the RB set in which the additional S-SSB is mapped.

In this way, the indication on the periodic resource allocation need not be changed between the slot in which the additional S-SSB is mapped and the slot in which the additional S-SSB is not mapped since the resource of the additional S-SSB is commonly recognized by other terminals.

Note that, in FIG. 17, the case has been described in which an overlapping resource with an RB set in which an additional S-SSB is mapped is determined in units of RB sets, but the present disclosure is not limited to this, and terminal 200 may determine an overlapping resource with an RB set in which an additional S-SSB is mapped in units of slots. In this case, for example, when the resource allocation indicated by the 1st stage SCI and a slot in which an additional S-SSB is mapped overlap with each other, terminal 200 does not transmit PSCCH/PSSCH in the slot.

(Embodiment 3)

Base station 100 and terminal 200 according to the present embodiment may have the same configurations as those in Embodiment 1.

In the present embodiment, terminal 200 configures the symbol length (number of symbols) of PSBCH to be shorter in accordance with the symbol length (for example, three symbols) of PSFCH without changing the symbol length of S-PSS/S-SSS in a slot in which the PSFCH is mapped (or transmitted), among slots in which an additional S-SSB can be mapped.

Here, for example, a periodic transmission position (for example, a slot position) may be specified for the PSFCH. For example, the parameter called sl-PSFCH-Period ($N_{PSSCH}^{PSFCH}$), which is indicated by RRC, indicates to terminal 200 how many slots of sidelink slots occurs before a PSFCH resource is mapped once. For example, it is possible to have a configuration in which $N_{PSSCH}^{PSFCH} = 0$ means no PSFCH, $N_{PSSCH}^{PSFCH} = 1$ means PSFCH is mapped in every slot, $N_{PSSCH}^{PSFCH} = 2$ means PSFCH is mapped once in two slots, and $N_{PSSCH}^{PSFCH} = 4$ means PSFCH is mapped once in four slots. As illustrated in (a) of FIG. 1, the PSFCH is mapped to the latter three symbols of a sidelink slot. Note that the final symbol is a guard period.

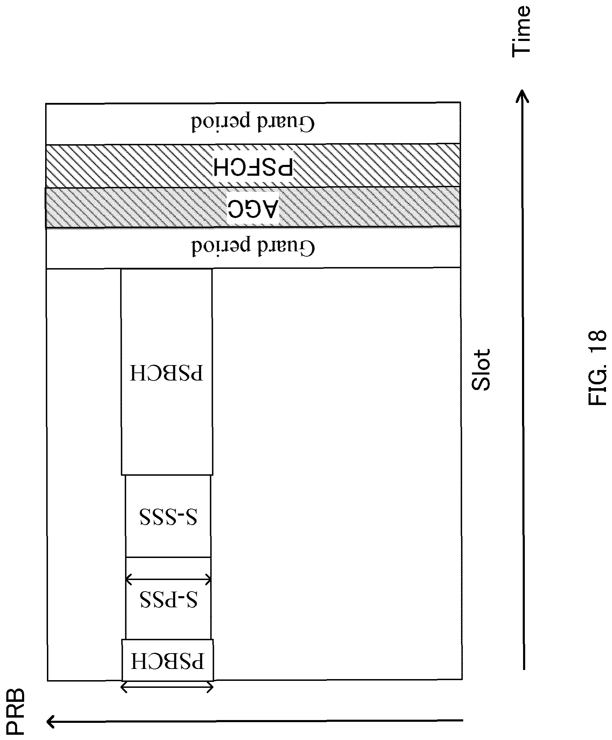

In the present embodiment, in a slot in which PSFCH is mapped, as illustrated in FIG. 18, the symbol length of S-SSB is shortened by three symbols as a symbol for transmitting the PSFCH and symbols for switching between the S-SSB and the PSFCH.

Here, the S-PSS and the S-SSS in the S-SSB are used for synchronization acquisition, and thus the symbol lengths of the S-PSS and the S-SSS are not changed. This ensures the synchronization accuracy. On the other hand, the symbol length of the PSBCH in the S-SSB is shortened by three symbols. For example, in the example of FIG. 18, the PSBCH is mapped to symbols #0, #5, and #6 to four symbols before the final symbol of the sidelink slot. In a case where the sidelink slot has 14 symbols, the PSBCH is mapped to symbols #0 and #5 to #9.

Terminal 200 may adjust the amount of resources by rate-matching the PSBCH, for example. In addition, terminal 200 may adjust the resources of the PSBCH by a method called puncturing, which deletes a signal in a non-transmittable symbol portion of the signal generated with a long symbol length.

In this way, it is possible to prevent collision between the additional S-SSB and the PSFCH.

Note that, as a variation of Embodiment 3, terminal 200 may determine to drop (not transmit) PSFCH in the same slot as a PSFCH region for which a periodic transmission position is specified, among slots in which an additional S-SSB can be mapped in a resource pool. In this way, the reception quality of PSBCH can be improved.

In addition, terminal 200 may drop PSFCH in an RB set in which an additional S-SSB is transmitted and may transmit PSFCH without dropping in an RB set in which an additional S-SSB is not transmitted, for example. In this way, it is possible to transmit and receive PSFCH in an RB set in which S-SSB is not transmitted. Further, terminal 200 may drop PSFCH even in an RB set other than the RB set in which S-SSB is transmitted. A terminal that receives the S-SSB cannot transmit PSFCH in another RB set due to the half duplex issue, and thus can prioritize the reception of the S-SSB.

In addition, the size for adjusting the symbol length of PSBCH is not limited to three symbols, and may be another number of symbols.

(Embodiment 4)

In the present embodiment, an additional PSFCH is mapped in the same symbol as the existing PSFCH. In addition, for example, in a PSFCH resource including PRB or a cyclic shift (CS), the resource is divided between the additional PSFCH and the existing PSFCH. In this way, it is possible to avoid collision between the additional PSFCH and PSSCH.

Note that a communication system according to the present embodiment includes base station 100 and terminal 200a. Base station 100 may have the same configuration as that in Embodiments 1 to 3. In addition, terminal 200a is different from terminal 200 according to Embodiments 1 to 3 in that terminal 200a performs an operation related to PSFCH.

[Regarding PSFCH]

For example, as described in Embodiment 3, a symbol (for example, a period) in which PSFCH is mapped is determined by the parameter called sl-PSFCH-Period ($N_{\text{PSSCH}}^{\text{PSFCH}}$) indicated by RRC. For example, a PSFCH resource may be mapped in slot #k, which satisfies mod(k, $N_{\text{PSSCH}}^{\text{PSFCH}}$) = 0, by using sidelink slot number #k.

In addition, a PRB used for PSFCH is configured by the parameter called sl-PSFCH-RB-Set-r16 ($M_{\text{PRB,set}}^{\text{PSFCH}}$). sl-PSFCH-RB-Set-r16 indicates which PRB is used for the PSFCH by a bit string (or bitmap), and $M_{\text{PRB,set}}^{\text{PSFCH}}$ indicates a set of PRBs used for the PSFCH.

$M_{\text{PRB,set}}^{\text{PSFCH}}$ is divided into $M_{\text{subch,slot}}^{\text{PSFCH}}$ corresponding to the PSFCH for each subchannel and each slot, for example, as follows.

$$[1]$$

$$M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right)$$

In addition, the PSFCH corresponding to the i-th slot and the j-th subchannel is selected from the following PRBs.

$$[2]$$

$$\left[ \left( i + j \cdot N_{\text{PSSCH}}^{\text{PSFCH}} \right) \cdot M_{\text{subch, slot}}^{\text{PSFCH}}, \left( i + 1 + j \cdot N_{\text{PSSCH}}^{\text{PSFCH}} \right) \cdot M_{\text{subch, slot}}^{\text{PSFCH}} - 1 \right] \text{ PRBs}$$

$$0 \leq i < N_{\text{PSSCH}}^{\text{PSFCH}}, \ 0 \leq j < N_{\text{subch}}$$

Further, the PSFCH can also be multiplexed by a cyclic shift (CS), and thus the number of resources of the PSFCH is as follows.

$$[3]$$

$$R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$$

Here, $N_{\text{type}}^{\text{PSFCH}}$ is set to $N_{\text{type}}^{\text{PSFCH}} = 1$ in a case where a resource of the PSFCH is determined only in association with the head subchannel number to which PSSCH is assigned, and $N_{\text{type}}^{\text{PSFCH}}$ is set to $N_{\text{type}}^{\text{PSFCH}} = N_{\text{subch}}^{\text{PSSCH}}$ in a case where a resource of the PSFCH is determined in association with all the subchannel numbers to which PSSCH is assigned. $N_{\text{subch}}^{\text{PSSCH}}$ indicates the number of subchannels to which the PSSCH is assigned. In addition, $N_{\text{CS}}^{\text{PSFCH}}$ indicates the number of cyclic shifts (CS) configured in the higher layer.

The PSFCH resource is specified by the following expression from the value of $P_{\text{ID}}$ which is the source ID and the value of $M_{\text{ID}}$ (also referred to as a member ID) specified in the higher layer used in a case of groupcast option 1 (NACK only).

$$[4]$$

$$(P_{\text{ID}} + M_{\text{ID}}) mod R_{\text{PRB, CS}}^{\text{PSFCH}}$$

In an unlicensed band, PSFCH cannot be transmitted when a signal is detected by sensing of a channel access procedure (LBT failure). Therefore, the following is under study as a method of retransmitting the PSFCH that cannot be transmitted.

- Alt 1: Support more than 1 PSFCH occasion per PSCCH/PSSCH transmission FFS other details, e.g., HARQ-ACK timeline
- Alt 2: PSFCH occasions are dynamically indicated

    FFS: Whether/how to handle the case where some TB's corresponding PSFCH cannot be transmitted within the same or different COT
    FFS other details, e.g., dynamically indicate one or more PSFCH transmission(s), container of the indication, etc.

In the present embodiment, a resource for transmitting an additional PSFCH (also referred to as a retransmission PSFCH) is specified. An additional PSFCH may be transmitted when the initial PSFCH cannot be transmitted, or may be transmitted when retransmission is requested from a transmission source terminal.

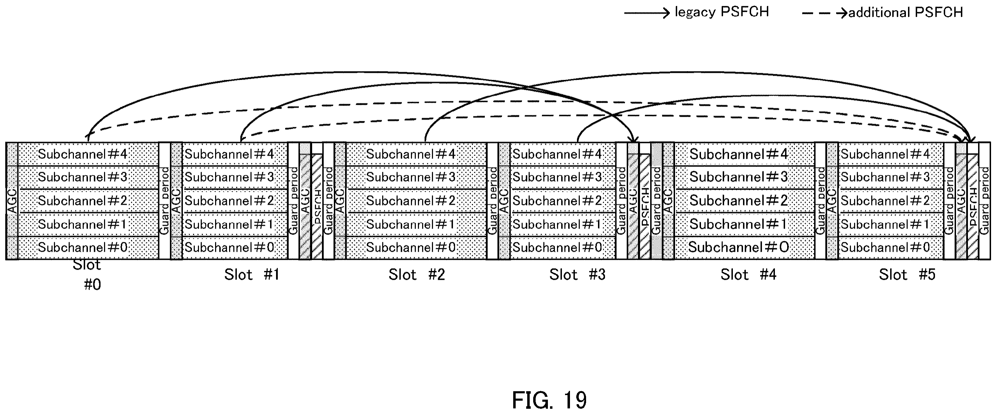

FIG. 19 illustrates an exemplary transmission timing of additional PSFCHs. The example of FIG. 19 illustrates a case where the existing PSFCH is mapped two or more slots after PSSCH, and sl-PSFCH-Period ($N_{\text{PSSCH}}^{\text{PSFCH}}$) is two. For example, the PSFCHs corresponding to the PSSCHs transmitted in slot #0 and slot #1 are transmitted in slot #3. In addition, when the PSFCHs are not transmitted in slot #3, additional PSFCHs may be transmitted in slot #5 as retransmission.

Hereinafter, operation examples according to the present embodiment will be each described.

[Operation Example 1]

In Operation Example 1, a resource is divided between an additional PSFCH and the existing PSFCH in units of PRBs.

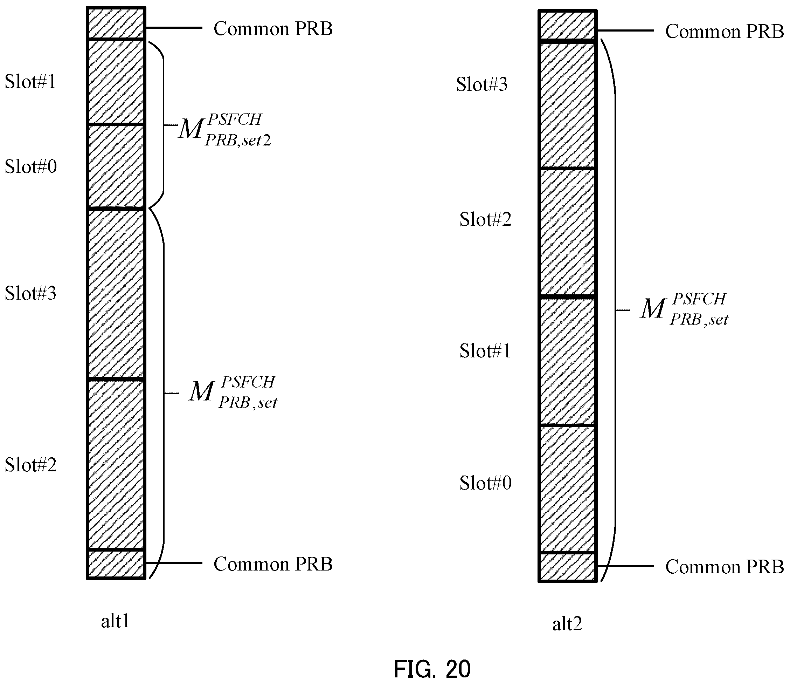

FIG. 20 illustrates exemplary configurations of PSFCH in Operation Example 1. The exemplary configurations of FIG. 20 illustrate the PSFCH in slot #5 illustrated in FIG. 19.

In Alt1 of FIG. 20, a PRB for PSFCH for an additional PSFCH is indicated to terminal 200a by a higher layer, in addition to $M_{\text{PRB,set}}^{\text{PSFCH}}$ which is a PRB for the existing PSFCH.

As an example of the parameter, "$M_{\text{PRB,set2}}^{\text{PSFCH}}$" may be used. For example, the existing PSFCHs for the PSSCHs in slot #2 and slot #3 are assigned to $M_{\text{PRB,set}}^{\text{PSFCH}}$. In addition, the additional PSFCHs for the PSSCHs in slot #0 and slot #1 are assigned to $M_{\text{PRB,set2}}^{\text{PSFCH}}$.

In this way, the amounts of resources in the region for the existing PSFCHs and the region for the additional PSFCHs can be configured to be variable. For example, in a case where the probability of using the additional PSFCHs is lower than that of the existing PSFCHs, the resource for the additional PSFCHs can be configured to be smaller. In addition, as illustrated in FIG. 20, in a case where $M_{PRB,set}^{PSFCH}$ and $M_{PRB,set2}^{PSFCH}$ are mapped to PRBs that do not overlap with each other, the resource for the existing PSFCHs and the resource for the additional PSFCHs do not interfere with (or collide with) each other.

In Alt2 of FIG. 20, $M_{PRB,set}^{PSFCH}$ is used in common between the existing PSFCHs and the additional PSFCHs. For example, when the resource for PSFCH is divided into $M_{subch,slot}^{PSFCH}$, the resource may be divided taking into consideration the additional PSFCHs. For example, the resource for PSFCH may be further divided into two parts from the existing expression, as in the following expression.

$$[5]$$

$$M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right) / 2$$

In this way, the size of $M_{subch,slot}^{PSFCH}$ is halved as compared with the existing method, but the region for the additional PSFCHs can be secured as illustrated in FIG. 20. In addition, in the existing PSFCH, the number of slots of $N_{PSSCH}^{PSFCH}$ corresponds to one PSFCH symbol, but in Alt 2, the number of slots of $N_{PSSCH}^{PSFCH} \times 2$ corresponds to one PSFCH symbol. Therefore, the PSFCH corresponding to the i-th slot and the j-th subchannel is selected from the following PRBs.

$$[6]$$

$$\left[ \left( i + j \cdot N_{PSSCH}^{PSFCH} \right) \cdot M_{subch,slot}^{PSFCH}, \left( i + 1 + j \cdot N_{PSSCH}^{PSFCH} \right) \cdot M_{subch,slot}^{PSFCH} - 1 \right] \text{ PRBs}$$

$$0 \le i < N_{\text{PSSCH}}^{\text{PSFCH}} * 2, \ 0 \le j < N_{\text{subch}}$$

In Alt 2, the sizes of the resource for the existing PSFCHs and the resource for the additional PSFCHs are the same. In addition, Alt2 has an advantage that the number of parameters to be changed is smaller than that in Alt1. Note that, in a case where the resource for the additional PSFCHs is further added, two divisions in the above expression is divided by K as follows to further add the resource.

$$[7]$$

$$M_{\text{subch, slot}}^{\text{PSFCH}} = M_{PRB,set}^{PSFCH} / \left( N_{subch} \cdot N_{PSSCH}^{PSFCH} \right) / K$$

$$\left[ \left( i + j \cdot N_{PSSCH}^{PSFCH} \right) \cdot M_{subch,slot}^{PSFCH}, \left( i + 1 + j \cdot N_{PSSCH}^{PSFCH} \right) \cdot M_{subch,slot}^{PSFCH} - 1 \right] \text{ PRBs}$$

$$0 \le i < N_{\text{PSSCH}}^{\text{PSFCH}} * K, \ 0 \le j < N_{\text{subch}}$$

As described above, in Operation Example 1, the resources for the existing PSFCHs and the additional PSFCHs are divided in units of PRBs, thereby preventing interference between the existing PSFCHs and the additional PSFCHs.

Note that, as illustrated in FIG. 20, the common PSFCH is configured in the regions at both ends of the PSFCH. This is the PSFCH that is transmitted in order to satisfy a request of OCB in sidelink communication.

[Operation Example 2]

In Operation Example 2, a resource for an additional PSFCH is determined in units of PSFCHs including CS. For example, the following expression may be changed.

$$[8]$$

$$(P_{\text{ID}} + M_{\text{ID}}) mod R_{\text{PRB, CS}}^{\text{PSFCH}}$$

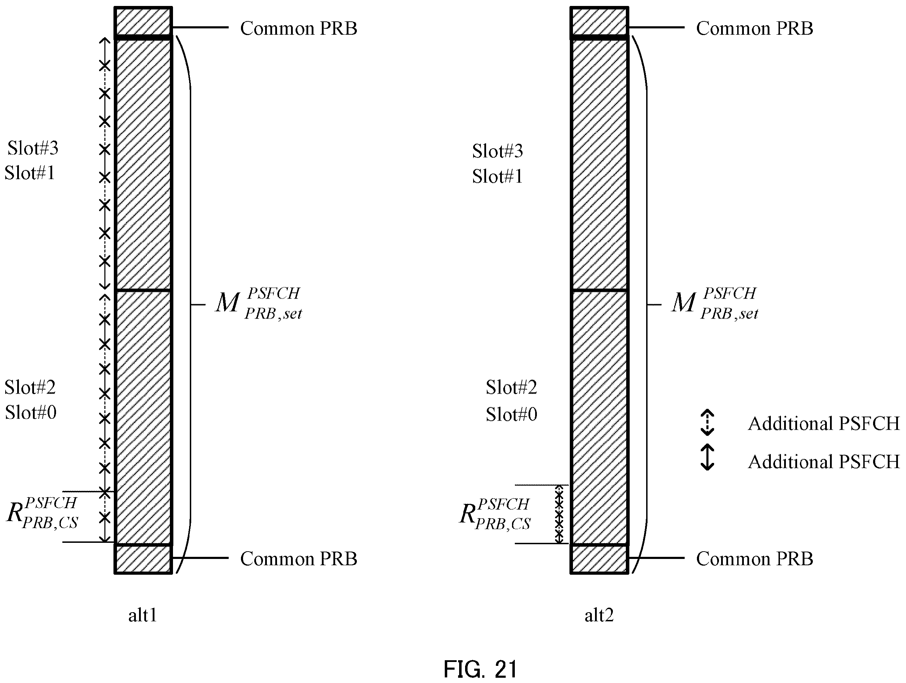

FIG. 21 illustrates exemplary configurations of PSFCH in Operation Example 2. The exemplary configurations of FIG. 21 illustrate the PSFCH in slot #5 illustrated in FIG. 19.

In Alt1 of FIG. 21, the above expression may be changed as follows.

[9]

$$(P_{\mathrm{ID}} + M_{\mathrm{ID}} + A) mod R_{\mathrm{PRB,\ CS}}^{\mathrm{PSFCH}}$$

Here, the value of A may be set to A= 0 in a case of the existing PSFCH and may be set to A= K in a case of the additional PSFCH. The value of K may be (pre-)configured. For example, the resource $R_{\mathrm{PRB,CS}}^{\mathrm{PSFCH}}$ that can be used for each subchannel and each slot can be divided by the shift amount of A.

Note that, since the suitable value of K varies depending on the method of assigning the number to the source ID and the method of assigning the member ID, the value of K can be set to a value that is less likely to cause interference by setting the value of K to a settable value.

In Alt2 of FIG. 21, the above expression may be changed as follows.

[10]

$$((P_{\mathrm{ID}} + M_{\mathrm{ID}}) * 2 + A) mod R_{\mathrm{PRB,\ CS}}^{\mathrm{PSFCH}}$$

Here, the value of A may be set to A= 0 in a case of the existing PSFCH and may be set to A = 1 in a case of the additional PSFCH. For example, the resource $R_{\mathrm{PRB,CS}}^{\mathrm{PSFCH}}$ that can be used for each subchannel and each slot is alternately allocated to the existing PSFCH and the additional PSFCH.

This reduces the probability of collision between the resource for the existing PSFCH and the resource for the additional PSFCH in a case where consecutive numbers are not used for the source IDs and the member IDs.

As described above, in Operation Example 2, the resource for PSFCH can be specified while the existing PSFCH and an additional PSFCH share the configuration of $R_{\mathrm{PRB,CS}}^{\mathrm{PSFCH}}$. In this way, in a case where an additional PSFCH is not used without the LBT failure, a wide PRB region can be used for the existing PSFCH as compared with Operation Example 1, thereby reducing the interference amount. Operation Example 2 is a method suitable for a case where the LBT failure is less likely to occur.

[Configuration of Terminal 200a]

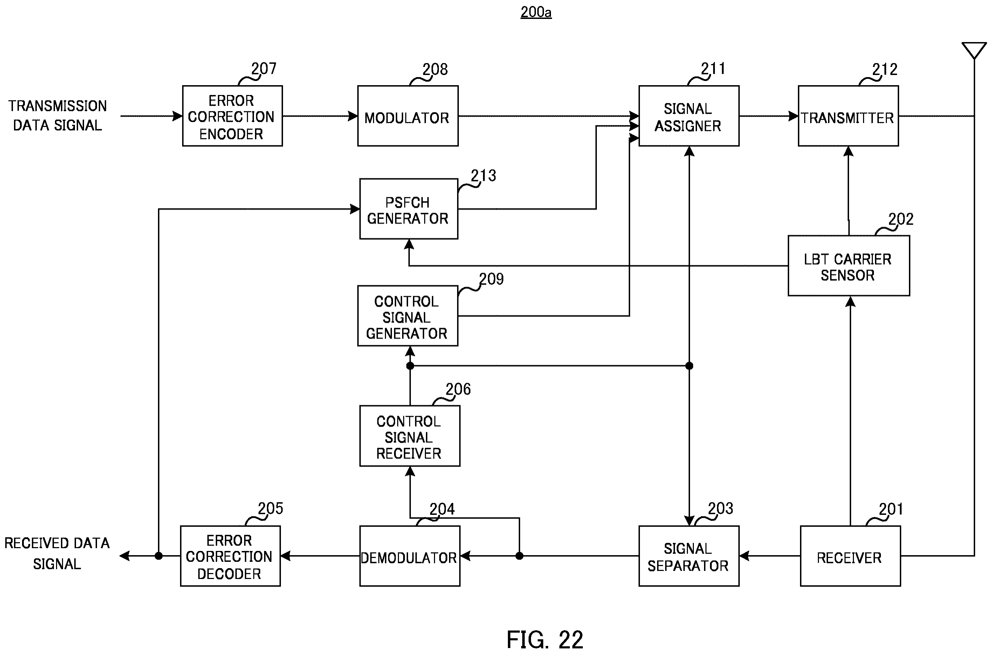

FIG. 22 is a block diagram illustrating an exemplary configuration of terminal 200a according to the present embodiment. Terminal 200a illustrated in FIG. 22 includes receiver 201, LBT carrier sensor 202, signal separator 203, demodulator 204, error correction decoder 205, control signal receiver 206, error correction encoder 207, modulator 208, control signal generator 209, PSFCH generator 213, signal assigner 211, and transmitter 212.

Note that at least one of LBT carrier sensor 202, signal separator 203, demodulator 204, error correction decoder 205, control signal receiver 206, control signal generator 209, error correction encoder 207, modulator 208, PSFCH generator 213, and signal assigner 211 may be included in the controller illustrated in FIG. 6. In addition, at least one of receiver 201 and transmitter 212 may be included in the communicator illustrated in FIG. 6.

Terminal 200a may be a transmission terminal (or a transmission source terminal) that transmits a sidelink signal in sidelink communication or may be a reception terminal (or a destination terminal) that receives a sidelink signal.

Receiver 201 receives a received signal via an antenna, and performs reception processing such as down-conversion on the received signal. The received signal may be, for example, a sidelink signal including S-SSB (existing S-SSB or additional S-SSB) and/or PSSCH/PSCCH. Note that the sidelink signal may include PSFCH. Further, the received signal received by receiver 201 may include an idle period or may include a signal other than a sidelink signal (downlink signal from base station 100). Receiver 201 outputs the received signal after the reception processing to LBT carrier sensor 202 and signal separator 203.

LBT carrier sensor 202 performs carrier sensing (also referred to as LBT) based on the received signal input from receiver 201. LBT carrier sensor 202 may determine, based on the received signal, whether the channel state is "busy (or LBT failure)" or "idle (or LBT OK)." In other words, LBT carrier sensor 202 may determine whether the channel is available based on the received signal input from receiver 201. For example, LBT carrier sensor 202 may perform the carrier sensing before transmitting PSFCH. LBT carrier sensor 202 outputs information indicating the determined channel state to transmitter 212. In addition, LBT carrier sensor 202 outputs the result of the carrier sensing related to PSFCH to PSFCH generator 213.

Signal separator 203 outputs, to demodulator 204, a received data signal of the received signal input from receiver 201, separates the 1st stage SCI mapped on PSCCH and the 2nd stage SCI mapped on a part of PSSCH, and outputs the separated information to control signal receiver 206.

Demodulator 204 performs demodulation processing on the received data signal input from signal separator 203. Demodulator 204 outputs the demodulated signal obtained through the demodulation processing to error correction decoder 205.

Error correction decoder 205 decodes the demodulated signal input from demodulator 204 and outputs the decoded signal as received data. In addition, error correction decoder 205 outputs the decoding result to PSFCH generator 213.

Control signal receiver 206 specifies (or grasps) resource allocation information including a reserved resource, based on the 1st stage SCI included in the signal input from signal separator 203. For example, control signal receiver 206 outputs, to signal assigner 211, the resource allocation information to avoid overlap with another resource. Further, control signal receiver 206 specifies (or grasps) the transmission ID and the reception ID based on the 2nd stage SCI included in the signal input from signal separator 203. Control signal receiver 206 determines whether resource allocation for terminal 200 is present, based on the specified transmission ID and reception ID. In a case where the resource allocation for terminal 200 is present, control signal receiver 206 instructs signal separator 203 to separate the received signal. In addition, control signal receiver 206 determines whether to perform transmission in COT acquired by another terminal or whether terminal 200 acquires COT based on the information related to COT included in the 1st stage SCI and the transmission ID included in the 2nd stage SCI, and outputs the information related to COT including the determination result to signal assigner 211 and control signal generator 209.

Error correction encoder 207 inputs a data signal, performs error correction encoding on the data signal, and outputs the data signal subjected to the error correction encoding to modulator 208.

Modulator 208 modulates the signal input from error correction encoder 207 and outputs the modulated signal to signal assigner 211.

Control signal generator 209 generates signals of the 1st stage SCI and the 2nd stage SCI based on control information (not illustrated). In addition, control signal generator 209 generates the information related to COT based on the information input from control signal receiver 206. Control signal generator 209 outputs the generated information to signal assigner 211.

PSFCH generator 213 generates HARQ-ACK, for example, based on the decoding result input from error correction decoder 205, and outputs the HARQ-ACK to signal assigner 211. In addition, PSFCH generator 213 generates an additional PSFCH and outputs the additional PSFCH to signal assigner 211 when transmission of PSFCH has failed, for example, based on the information (for example, information indicating whether the PSFCH has been transmitted) input from LBT carrier sensor 202.

Signal assigner 211 assigns, to a resource, the signal input from modulator 208, the signal (for example, the PSFCH signal or the additional PSFCH signal) input from PSFCH generator 213, or the signal input from control signal generator 209. In addition, signal assigner 211 may configure (for example, change) the CP length of the signal based on, for example, the information related to COT input from control signal receiver 206. For example, signal assigner 211 may not add the CP length in a case of acquiring COT, and may increase the CP length in a case of transmission in an acquired COT. Signal assigner 211 outputs the transmission signal to transmitter 212 after the resource allocation.

When the sensing result acquired from LBT carrier sensor 202 indicates an idle state, transmitter 212 performs transmission processing such as up-conversion on the transmission signal input from signal assigner 211, and transmits the transmission signal after the transmission processing via an antenna.

The operation examples according to the present embodiment have been each described, thus far.

In the present embodiment, terminal 200a divides a resource for PSFCH between the existing PSFCH and an additional PSFCH in sidelink communication in an unlicensed band, and uses the resource. This makes it possible to avoid collision between the additional PSFCH and the existing PSFCH.

The embodiments have been each described, thus far.

[Variation]

Note that each operation example of each embodiment described above may be used in combination. For example, a terminal according to an embodiment of the present disclosure may include at least one configuration (for example, the configuration of terminal 200) in Embodiments 1 to 3 and the configuration (for example, the configuration of terminal 200a) in Embodiment 4.

Further, the resource mapping illustrated in each operation example of each embodiment described above is an example, and the resources need not be consecutive in the frequency domain. For example, in a case where the interlace allocation is applied, the resources may be dispersedly mapped. The interlace allocation can be applied to, for example, any of S-SSB, PSCCH/PSSCH, and PSFCH.

Further, terminals that perform transmission and/or reception in sidelink include a terminal that performs transmission and does not perform reception in sidelink, a terminal that performs reception and does not perform transmission in sidelink, and a terminal that performs both transmission and reception in sidelink.

Further, when a configuration relating to sidelink is configured in advance, the configuration method may be configured in advance in specifications (standards) or may be configured in advance in a subscriber identity module (SIM).

Alternatively, the configuration relating to sidelink may be configured in an application layer called pre-configured, in a higher layer such as a system information block (SIB) called configured and/or another radio resource control (RRC), or in a medium access control (MAC).

Further, each of the embodiments described above illustrates the case of sidelink communication, but the present disclosure is not limited thereto. For example, in each embodiment described above, PSCCH may be replaced with PDCCH, PSSCH may be replaced with PDSCH or PUSCH, PSFCH may be replaced with PUCCH, and PSBCH may be replaced with PBCH, and the present disclosure may be applied to communication between the base station and the terminal.

Further, in the embodiments described above, operation examples in an unlicensed band have been indicated, but the frequency band of an unlicensed band may vary from country to country or may vary for each region. The frequency band of an unlicensed band includes, exemplarily, the 5 GHz band (5150 MHz to 5925 MHz), the 6 GHz band (5925 MHz to 7125 MHz), and 52.6 GHz to 71 GHz.

Further, the usability of each of the above-described embodiments or each of the operation examples may be changed according to the SCS.

Further, Type 1 LBT and Type 2 LBT may be called by other names in sidelink communication.

The SCI format to be transmitted in PSCCH may be SCI format 1-A or a newly added SCI format.

Further, the above-described embodiments may be applied to S-PSS/SSS/PSBCH.

Further, in each of the above-described embodiments, the destination terminal may refer to a plurality of terminals in a case of groupcast and broadcast.

The guard band may also be referred to as an intra-cell guard band.

Further, the resource allocation for sidelink communication illustrated in each of the embodiments described above is an example, and the present disclosure is not limited thereto. For example, signals, channels, idle periods, or the like that are not illustrated may be included in resources for the sidelink communication. Further, the widths of signals in the time direction and frequency direction illustrated in the drawings are not limited to the illustrated examples. Further, the size of a slot, the size of a resource, the size of a channel, the size of a signal, and the like are not limited to the examples described above.

Further, each of the embodiments described above has exemplified a case in which the duration of a sidelink signal is adjusted by increasing the CP length of the sidelink signal by the CP extension, but the present disclosure is not limited thereto. Instead of increasing the CP length, the duration may be adjusted by adding a known signal.

Further, in each of the embodiments described above, the confirmation of availability of the channel may be replaced with an expression such as sensing (or monitoring) for availability of the channel. Further, in this case, the term "channel" may be replaced with another term such as "carrier" or "resource."

Further, the indication method of control information from base station 100 to terminal 200 is not limited to the examples described above, and the control information may be indicated (or broadcast, instructed, configured) by at least one of system information such as MIB and SIB, RRC control information, MAC control information, and downlink control information (DCI), may be configured in advance to terminal 200, and/or may be predefined in specifications.

The base station may be referred to as a gNodeB or a gNB. Further, the terminal may be referred to as UE.

The time resource unit such as a slot may be replaced with another unit such as a system frame, a time slot, a minislot, a frame, a subframe, a block, or the like.

Further, any term ending with a suffix, such as "-er" "-or" or "-ar", in the embodiments described above may be replaced with another term, such as "circuitry," "device," "unit," or "module."

Note that the terms "interpret," "identify," "determine," "judge," "decide," "calculate," "grasp," "recognize," "confirm," or "understand" may be used interchangeably.

(Complement)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments. Alternatively, the capability information may include information elements that indicate whether terminal 200 supports a combination of any two or more of the functions, operations, or pieces of processing that have been described in the above-mentioned embodiments.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control sidelink communication between terminals 200 based on the capability information received from terminal 200.

Note that in a case where terminal 200 does not entirely support the functions, operations, or pieces of processing described in the above-mentioned embodiments, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

(Control Signals)

In the present disclosure, the downlink control signal (or downlink control information) related to an exemplary embodiment of the present disclosure may be, for example, a signal (or information) transmitted in a physical downlink control channel (PDCCH) in a physical layer or may be a signal (or information) transmitted in a medium access control control element (MAC CE) or a radio resource control (RRC) in a higher layer. Further, the signal (or information) is not limited to that indicated by the downlink control signal, but may be predefined in specifications (or standards) or may be configured in advance to the base station and the terminal.

In the present disclosure, the uplink control signal (or uplink control information) according to an exemplary embodiment of the present disclosure may be, for example, a signal (or information) transmitted in PUCCH in the physical layer or may be a signal (or information) transmitted in the MAC CE or RRC in the higher layer. Further, the signal (or information) is not limited to that indicated by the uplink control signal, but may be predefined in specifications (or standards) or may be configured in advance to the base station and the terminal. Further, the uplink control signal may be replaced with, for example, uplink control information (UCI), 1st stage sidelink control information (SCI) or 2nd stage SCI.

(Base Station)

In an exemplary embodiment of the present disclosure, the base station may be, for example, a transmission reception point (TRP), a clusterhead, an access point, a remote radio head (RRH), an eNodeB (eNB), a gNodeB (gNB), a base station (BS), a base transceiver station (BTS), a base unit, a gateway, or the like. Further, in sidelink communication, the terminal may play a role of the base station. Furthermore, instead of the base station, a relay apparatus that relays communication between a higher node and a terminal may be used. The base station may be a roadside unit as well.

(Uplink/Downlink/Sidelink)

An exemplary embodiment of the present disclosure may be applied to, for example, any of uplink, downlink, and sidelink. For example, an exemplary embodiment of the present disclosure may be applied to uplink channels, such as a Physical Uplink Shared Channel (PUSCH), a Physical Uplink Control Channel (PUCCH), and a Physical Random Access Channel (PRACH), downlink channels, such as a Physical Downlink Shared Channel (PDSCH), PDCCH, and a Physical Broadcast Channel (PBCH), and side link channels, such as a Physical Sidelink Shared Channel (PSSCH), a Physical Sidelink Control Channel (PSCCH), and a Physical Sidelink Broadcast Channel (PSBCH).

Note that, PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

An exemplary embodiment of the present disclosure may be applied to, for example, any of data channels and control channels. For example, channels in an exemplary embodiment of the present disclosure may be replaced with any of data channels including PDSCH, PUSCH, and PSSCH, or control channels including PDCCH, PUCCH, PBCH, PSCCH, and PSBCH.

(Reference Signals)

In an exemplary embodiment of the present disclosure, the reference signals are, for example, signals known to both a base station and a mobile station and each reference signal may be referred to as a reference signal (RS) or sometimes a pilot signal. Each reference signal may be any of a Demodulation Reference Signal (DMRS), a Channel State Information-Reference Signal (CSI-RS), a Tracking Reference Signal (TRS), a Phase Tracking Reference Signal (PTRS), a Cell-Specific Reference Signal (CRS), or a Sounding Reference Signal (SRS).

(Time Intervals)

In an exemplary embodiment of the present disclosure, time resource units are not limited to one or a combination of slots and symbols, and may be time resource units, such as frames, superframes, subframes, slots, time slots, subslots, minislots, or symbols, orthogonal frequency division multiplexing (OFDM) symbols, single carrier-frequency division multiplexing (SC-FDMA) symbols, or other time resource units. The number of symbols included in one slot is not limited to any number of symbols exemplified in the embodiments described above, and may be other numbers of symbols.

(Frequency Bands)

An exemplary embodiment of the present disclosure may be applied to any of a licensed band and an unlicensed band.

(Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, a Physical Sidelink Feedback Channel (PSFCH), PSBCH, PDCCH, PUCCH, PDSCH, PUSCH, and PBCH.

Further, an exemplary embodiment of the present disclosure may be applied to any of a terrestrial network or a non-terrestrial network (NTN) using a satellite or a high altitude pseudo satellite (HAPS). In addition, the present disclosure may be applied to a network having a large cell size, and a terrestrial network with a large delay compared with a symbol length or a slot length, such as an ultra-wideband transmission network.

(Antenna Ports)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

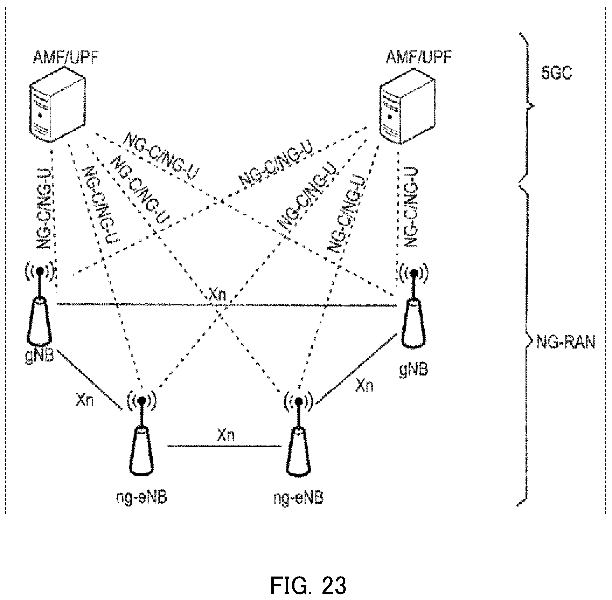

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 23 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the duration of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

<Functional Split between NG-RAN and 5GC in 5G NR>

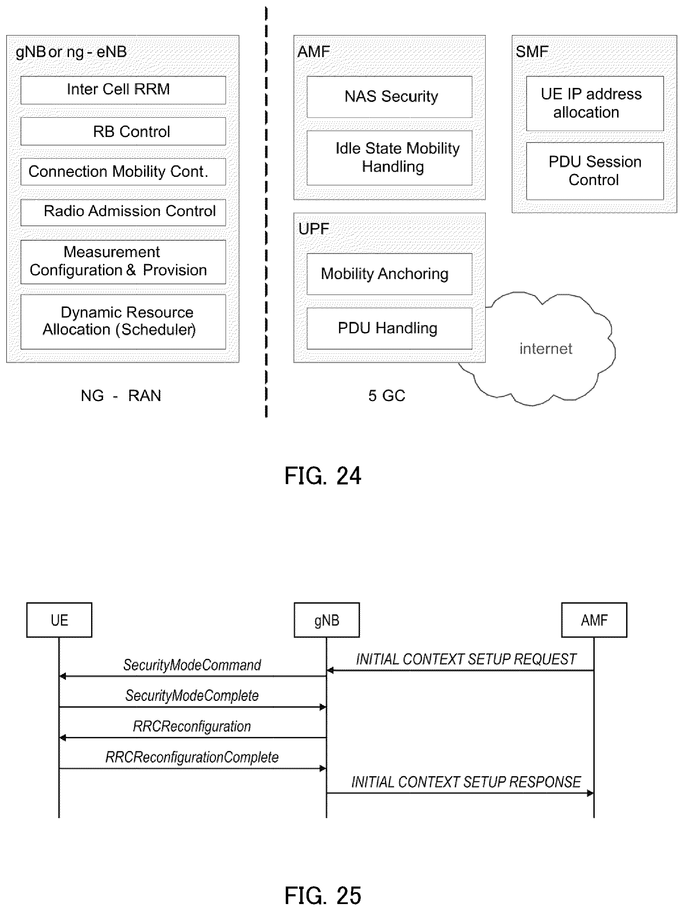

FIG. 24 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in uplink;
- Session management;
- Support of network slicing;
- QoS flow management and mapping to data radio bearers;
- Support of UEs in the RRC_INACTIVE state;
- Distribution function for NAS messages;

- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

FIG. 25 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

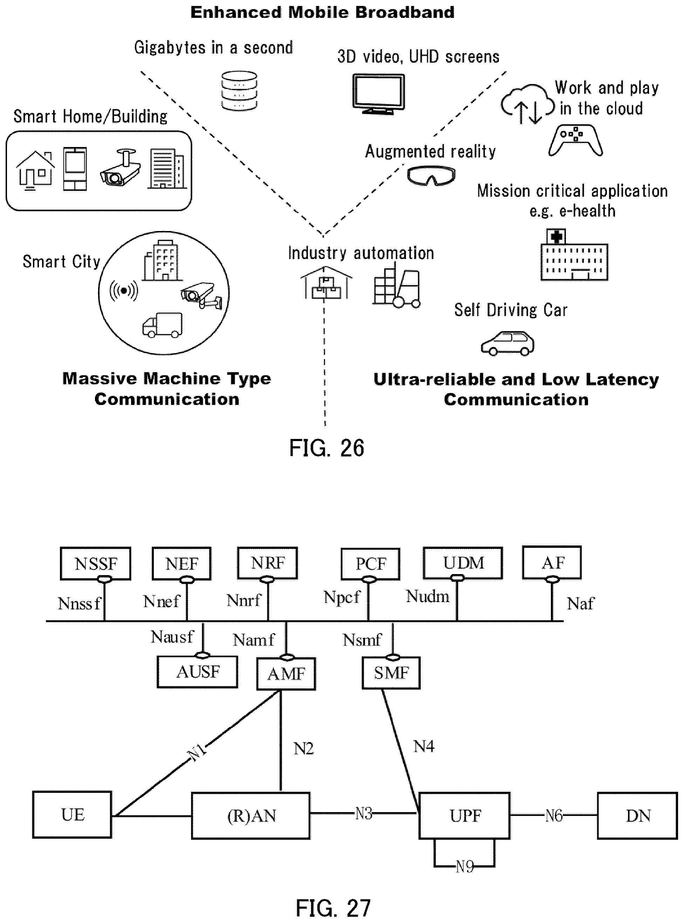

FIG. 26 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 26 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few μs where the value can be one or a few μs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 25. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 27 illustrates a 5G NR non-roaming reference architecture (see TS 23.501 v16.1.0, section 4.23). An Application Function (AF), e.g., an external application server hosting 5G services, exemplarily described in FIG. 26, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 27 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to an exemplary embodiment of the present disclosure includes: control circuitry, which, in operation, determines allocation of a resource that does not collide with a synchronization signal block to a signal different from the synchronization signal block in a time resource in which the synchronization signal block is transmittable, the synchronization signal block being mapped in a resource pool used for terminal-to-terminal communication in an unlicensed band; and communication circuitry, which, in operation, performs transmission or reception of the signal.

In an exemplary embodiment of the present disclosure, the control circuitry determines to transmit the signal when the communication apparatus is capable of transmitting the synchronization signal block in the time resource, and the control circuitry does not transmit the signal when the communication apparatus is not capable of transmitting the synchronization signal block in the time resource.

In an exemplary embodiment of the present disclosure, the control circuitry applies, in a case where the time resource is included in a channel occupancy time, certain carrier sensing having a shorter sensing time than first carrier sensing to the synchronization signal block, and applies the certain carrier sensing being referred to as second carrier sensing to the signal.

In an exemplary embodiment of the present disclosure, the second carrier sensing is any of a Type 2A channel access procedure, a Type 2B channel access procedure, and/or a Type 2C channel access procedure, and the control circuitry applies the Type 2A channel access procedure to the synchronization signal block and applies any one of the Type 2A channel access procedure, the Type 2B channel access procedure, and/or the Type 2C channel access procedure to the signal.

In an exemplary embodiment of the present disclosure, the control circuitry applies, in a case where the time resource is outside a channel occupancy time, certain carrier sensing having a shorter sensing time than first carrier sensing to the synchronization signal block, and applies the first carrier sensing to the signal, the certain carrier sensing being referred to as second carrier sensing.

In an exemplary embodiment of the present disclosure, the control circuitry does not transmit the signal in a first resource block set in which the synchronization signal block is transmittable and transmits the signal in a second resource block set different from the first resource block set in the time resource.

In an exemplary embodiment of the present disclosure, the control circuitry transmits, in the time resource, the signal in a resource different from a resource to which the synchronization signal block is assigned, in a first resource block set in which the synchronization signal block is transmittable.

In an exemplary embodiment of the present disclosure, a cyclic prefix (CP) extension for the synchronization signal block is configured longer than the CP extension for the signal in the time resource.

In an exemplary embodiment of the present disclosure, the control circuitry transmits the signal when the communication apparatus is not capable of transmitting the synchronization signal block and carrier sensing results in an idle state in the time resource.

In an exemplary embodiment of the present disclosure, the control circuitry transmits the signal when the carrier sensing results in an idle state in a resource block set in which the synchronization signal block is likely to be transmitted and a resource block set in which the signal is transmitted, in the time resource.

In an exemplary embodiment of the present disclosure, the control circuitry transmits the signal when the carrier sensing results in an idle state in a resource block set in which the signal is transmitted, in the time resource.

In an exemplary embodiment of the present disclosure, the synchronization signal block includes a synchronization signal and a broadcast channel, and the control circuitry configures a number of symbols to which the broadcast channel is assigned to be smaller in accordance with a number of symbols to which a feedback channel is assigned without changing a number of symbols to which the synchronization signal is assigned in a resource in which the feedback channel is transmitted, the resource being included in the time resource.

A communication method according to an exemplary embodiment of the present disclosure includes: determining, by a communication apparatus, allocation of a resource that does not collide with a synchronization signal block to a signal different from the synchronization signal block in a time resource in which the synchronization signal block is transmittable, the synchronization signal block being mapped in a resource pool used for terminal-to-terminal communication in an unlicensed band; and performing, by the communication apparatus, transmission or reception of the signal.

The disclosure of Japanese Patent Application No. 2023-022523, filed on February 16, 2023, including the specification, drawings and abstract, is incorporated herein by reference in its entirety.

Industrial Applicability

An embodiment of the present disclosure is useful for radio communication systems.

Reference Signs List

100 Base station
200, 200a Terminal
201 Receiver
202 LBT carrier sensor
203 Signal separator
204 Demodulator
205 Error correction decoder
206 Control signal receiver
207 Error correction encoder
208 Modulator
209 Control signal generator
210 S-SSB generator
211 Signal assigner
212 Transmitter
213 PSFCH generator

**Claims**

1. A communication apparatus comprising:

   control circuitry, which, in operation, determines allocation of a resource that does not collide with a synchronization signal block to a signal different from the synchronization signal block in a time resource in which the synchronization signal block is transmittable, the synchronization signal block being mapped in a resource pool used for terminal-to-terminal communication in an unlicensed band; and
   communication circuitry, which, in operation, performs transmission or reception of the signal.

2. The communication apparatus according to claim 1, wherein, the control circuitry determines to transmit the signal when the communication apparatus is capable of transmitting the synchronization signal block in the time resource, and the control circuitry does not transmit the signal when the communication apparatus is not capable of transmitting the synchronization signal block in the time resource.

3. The communication apparatus according to claim 1, wherein, the control circuitry applies, in a case where the time resource is included in a channel occupancy time, certain carrier sensing having a shorter sensing time than first carrier sensing to the synchronization signal block, and applies the certain carrier sensing being referred to as second carrier sensing to the signal.

4. The communication apparatus according to claim 3, wherein,

   the second carrier sensing is any of a Type 2A channel access procedure, a Type 2B channel access procedure, and/or a Type 2C channel access procedure, and
   the control circuitry applies the Type 2A channel access procedure to the synchronization signal block and applies any one of the Type 2A channel access procedure, the Type 2B channel access procedure, and/or the Type 2C channel access procedure to the signal.

5. The communication apparatus according to claim 1, wherein,
   the control circuitry applies, in a case where the time resource is outside a channel occupancy time, certain carrier sensing having a shorter sensing time than first carrier sensing to the synchronization signal block, and applies the first carrier sensing to the signal, the certain carrier sensing being referred to as second carrier sensing.

6. The communication apparatus according to claim 1, wherein,
the control circuitry does not transmit the signal in a first resource block set in which the synchronization signal block is transmittable and transmits the signal in a second resource block set different from the first resource block set in the time resource.

7. The communication apparatus according to claim 1, wherein,
the control circuitry transmits, in the time resource, the signal in a resource different from a resource to which the synchronization signal block is assigned, in a first resource block set in which the synchronization signal block is transmittable.

8. The communication apparatus according to claim 1, wherein,
a cyclic prefix (CP) extension for the synchronization signal block is configured longer than the CP extension for the signal in the time resource.

9. The communication apparatus according to claim 8, wherein,
the control circuitry transmits the signal when the communication apparatus is not capable of transmitting the synchronization signal block and carrier sensing results in an idle state in the time resource.

10. The communication apparatus according to claim 9, wherein,
the control circuitry transmits the signal when the carrier sensing results in an idle state in a resource block set in which the synchronization signal block is likely to be transmitted and a resource block set in which the signal is transmitted, in the time resource.

11. The communication apparatus according to claim 9, wherein,
the control circuitry transmits the signal when the carrier sensing results in an idle state in a resource block set in which the signal is transmitted, in the time resource.

12. The communication apparatus according to claim 1, wherein,

the synchronization signal block includes a synchronization signal and a broadcast channel, and
the control circuitry configures a number of symbols to which the broadcast channel is assigned to be smaller in accordance with a number of symbols to which a feedback channel is assigned without changing a number of symbols to which the synchronization signal is assigned in a resource in which the feedback channel is transmitted, the resource being included in the time resource.

13. A communication method comprising:

determining, by a communication apparatus, allocation of a resource that does not collide with a synchronization signal block to a signal different from the synchronization signal block in a time resource in which the synchronization signal block is transmittable, the synchronization signal block being mapped in a resource pool used for terminal-to-terminal communication in an unlicensed band; and
performing, by the communication apparatus, transmission or reception of the signal.

14. An integrated circuit that controls processing of a communication apparatus, the processing comprising:

determining allocation of a resource that does not collide with a synchronization signal block to a signal different from the synchronization signal block in a time resource in which the synchronization signal block is transmittable, the synchronization signal block being mapped in a resource pool used for terminal-to-terminal communication in an unlicensed band; and
performing transmission or reception of the signal.

FIG. 1

FIG. 2

FIG. 3

Frequency

NCB

OCB 80%

#0 #4 #3 #2 #1 #0 ...... #4 #3 #2 #1 #0 #4 #3 #2 #1 #0

FIG. 4

100

CONTROLLER ↔ COMMUNICATOR

FIG. 5

200

CONTROLLER ↔ COMMUNICATOR

FIG. 6

FIG. 7

Type 2 channel access

Type 1 channel access

Frequency

| RB set#1 | RB set#0 |

PSBCH

S-SSS

S-PSS

PSBCH

UE-A PSSCH

PSCCH (1st-stage SCI)

AGC

Slot #K

Slot #K+1

UE-A initiating COT

FIG. 8

Type 1 channel access

Type 2 channel access

Frequency

RB set#1

RB set#0

AGC

PSSCH
UE-B

PSCCH
(1st-stage SCI)

PSBCH

S-PSS

S-SSS

PSBCH

AGC

PSCCH
(1st-stage SCI)

PSSCH
UE-A to UE-B

Slot #K

Slot #K+1

UE-B initiating COT

FIG. 9

EP 4 668 949 A1

FIG. 10

FIG. 11

FIG. 12

FIG. 13

FIG. 14

Alt 1

Alt 2

Type 1 channel access

Type 2 channel access

RB set#1

RB set#0

PSBCH

S-PSS

S-SSS

PSBCH

CPE

AGC

PSCCH
(1st-stage SCI)

PSSCH
UE-B

idle

| RB set#0 | RB set#1 |
|----------|----------|

FIG. 15

idle

AGC

PSCCH
(1st–stage SCI)

PSSCH
UE–B

CPE

PSBCH

S-PSS

S-SSS

PSBCH

Type 1 channel access

Type 2 channel access

**FIG. 16**

SL resource pool

| RB set#0 | RB set#1 | RB set#2 | RB set#3 |

AGC

PSCCH
(1st-stage SCI)

PSSCH

PSBCH

S-PSS

S-SSS

PSBCH

PSBCH

S-PSS

S-SSS

PSBCH

SL resource pool

| RB set#0 | RB set#1 | RB set#2 | RB set#3 |

AGC

PSCCH
(1st-stage SCI)

PSSCH

PSBCH

S-PSS

S-SSS

PSBCH

PSBCH

S-PSS

S-SSS

PSBCH

FIG. 17

FIG. 18

FIG. 19

legacy PSFCH → additional PSFCH

Slot #0 Slot #1 Slot #2 Slot #3 Slot #4 Slot #5

EP 4 668 949 A1

Slot#1

Slot#0

Slot#3

Slot#2

Common PRB

$M_{PRB,set2}^{PSFCH}$

$M_{PRB,set}^{PSFCH}$

Common PRB

alt1

Slot#3

Slot#2

Slot#1

Slot#0

Common PRB

$M_{PRB,set}^{PSFCH}$

Common PRB

alt2

FIG. 20

Slot#3
Slot#1

$M^{PSFCH}_{PRB,set}$

Slot#2
Slot#0

$R^{PSFCH}_{PRB,CS}$

Common PRB

Common PRB

alt1

Common PRB

$M^{PSFCH}_{PRB,set}$

Additional PSFCH

Additional PSFCH

Slot#3
Slot#1

Slot#2
Slot#0

$R^{PSFCH}_{PRB,CS}$

Common PRB

alt2

FIG. 21

212 TRANSMITTER

202 LBT CARRIER SENSOR

201 RECEIVER

211 SIGNAL ASSIGNER

203 SIGNAL SEPARATOR

200a

208 MODULATOR

213 PSFCH GENERATOR

209 CONTROL SIGNAL GENERATOR

206 CONTROL SIGNAL RECEIVER

204 DEMODULATOR

207 ERROR CORRECTION ENCODER

205 ERROR CORRECTION DECODER

TRANSMISSION DATA SIGNAL

RECEIVED DATA SIGNAL

FIG. 22

FIG. 23

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

SMF

UE IP address
allocation

PDU Session
Control

internet

5 GC

## FIG. 24

| UE | gNB | AMF |

INITIAL CONTEXT SETUP REQUEST

SecurityModeCommand

SecurityModeComplete

RRCReconfiguration

RRCReconfigurationComplete

INITIAL CONTEXT SETUP RESPONSE

## FIG. 25

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 26

FIG. 27

## INTERNATIONAL SEARCH REPORT

| International application No. |
| --- |
| **PCT/JP2024/000703** |

| | | |
| --- | --- | --- |
| **A.** | **CLASSIFICATION OF SUBJECT MATTER** | |

*H04W 72/0446*(2023.01)i; *H04W 4/46*(2018.01)i; *H04W 16/14*(2009.01)i; *H04W 56/00*(2009.01)i;
*H04W 72/0453*(2023.01)i; *H04W 72/54*(2023.01)i; *H04W 92/18*(2009.01)i
FI: H04W72/0446; H04W72/0453; H04W92/18; H04W72/54 110; H04W4/46; H04W56/00 130; H04W16/14

According to International Patent Classification (IPC) or to both national classification and IPC

| | | |
| --- | --- | --- |
| **B.** | **FIELDS SEARCHED** | |

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| X | HUAWEI, HISILICON, Physical channel design for sidelink operation over unlicensed spectrum [online], 3GPP TSG RAN WG1 #110 R1-2205887, 12 August 2022, [retrieved on 28 February 2024], Internet: <URL: https://www.3gpp.org/ftp/tsg_ran/WG1_RL1/TSGR1_110/Docs/R1-2205887.zip> particularly, section 2.5.1 | 1, 13–14 |
| Y | particularly, section 2.5.1, fig. 16 | 3-4 |
| A | particularly, section 2.5.1 | 2, 5-12 |
| Y | LENOVO, Channel access mechanism for sidelink on FR1 unlicensed spectrum [online], 3GPP TSG RAN WG1 #111 R1-2211579, 07 November 2022, [retrieved on 28 February 2024], Internet: <URL: https://www.3gpp.org/ftp/tsg_ran/WG1_RL1/TSGR1_111/Docs/R1-2211579.zip> particularly, sections 2.5.1, 2.7 | 3-4 |

☐ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 February 2024** | **12 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023022523 A

**Non-patent literature cited in the description**

- Study on NR Vehicle-to-Everything (V2X). *3GPP, TR 38.885 V16.0.0*
- **LG ELECTRONICS**. WID revision: NR Sidelink enhancement. *RP-201385*, 29 June 2020
- **OPPO**. New WID on NR Sidelink evolution. *RP-213678*, 06 December 2021
- NR; Radio Resource Control (RRC); Protocol specification. *3GPP, TS 38.331 V17.3.0*